# EUROPEAN PATENT APPLICATION

(11) **EP 3 828 537 A1**
(43) Date of publication of application: **02.06.2021**
(21) Application number: 19841598.6
(22) Date of filing: 19.07.2019
(51) Int. Cl.: G01N 30/60

(54) **COLUMN HARDWARE AND SEPARATION COLUMN, AND METHOD FOR MANUFACTURING SAME**

(30) Priority: 23.07.2018 JP 2018138066
(71) Applicant: GL Sciences Incorporated, Tokyo 163-1130 (JP)
(72) Inventor: MOTOKAWA Masanori, Iruma-shi Saitama 358-0032 (JP); HASHIMOTO Junichi, Fukushima-shi Fukushima 960-8201 (JP); KANO Mika, Fukushima-shi Fukushima 960-8201 (JP); MURAYAMA Nozomi, Fukushima-shi Fukushima 960-8201 (JP)
(74) Representative: Staeger & Sperling Partnerschaftsgesellschaft mbB
(86) International application number: PCT/JP2019/028532
(87) International publication number: WO 2020/022226

(57) **Abstract**

One object of the present invention is to prevent non-specific metal coordination adsorption of solutes in a sample, while achieving high pressure resistance through the use of a metal column hardware column, and to prevent non-specific adsorption of basic solutes and non-specific hydrophobic adsorption of highly hydrophobic solutes. As a means for achieving the foregoing, proposed is column hardware 1 for liquid chromatography, in which a first membrane 41 containing SiO₂ as a main component is provided on a metallic liquid-contact portion by mobile phase 3 of the column hardware 1 for liquid chromatography, and a second membrane 42 in which silanol groups on the SiO₂ surface are alkylsilylated is provided on a surface 411 of the first membrane 41.

## Description

### [Technical Field]

This invention relates to column hardware and separation columns for liquid chromatography, and more specifically relates to column hardware and separation columns for use in high performance liquid chromatography (HPLC) or ultra high performance liquid chromatography (UHPLC), and further relates to processes for producing the same.

Here, "high performance liquid chromatography (HPLC)" means liquid chromatography performed under a pressure of up to 40 MPa. "Ultra high performance liquid chromatography (UHPLC)" means liquid chromatography performed under a pressure of greater than 40 MPa and up to 130 MPa. Also, a "separation column" is an apparatus used in liquid chromatography, and hereinafter, a "separation column" is also simply referred to as a "column"

"Column hardware" refers to components of a separation column other than a packed bed and refers to components having a flow path which a mobile phase containing a sample liquid-contacts or contacts and passes through, including some or all of the following: column tubes, frits (filters), end unions, dispersion plates, filter assemblies, and filter insert assemblies.

A column tube and an end union may be connected by cutting grooves on the outside of an end of the column tube and the inside of the end union, respectively, and screwing the column tube into the end union. Also, a nut and a ferrule may be passed through an end of a column tube, and an end union with a groove cut outside may be screwed into the ferrule to connect the column tube and the end union that are fixed by tightening the nut.

### [Background Art]

In HPLC or UHPLC, it is necessary to use columns packed with small packing materials to speed up separation, that is, generate large numbers of theoretical plates in a short period of time to reduce separation time. However, a small column packing material reduces the gap within the packing material that makes up the flow path through which a mobile phase containing a sample (hereinafter also simply referred to as "mobile phase") passes, and therefore a high pressure is required for sending the mobile phase. Therefore, a metal such as stainless steel is used for column hardware having a flow path for a mobile phase, such as a column tube in which a packing material can be placed, so as to withstand high pressure.

However, in the metallic column hardware, since the metal is exposed in the liquid-contact portion by mobile phase such as the inner wall of the column tube or the surface of the frit, the solute in the sample may undergo non-specific metal coordination adsorption on the exposed area of the metal of the metallic column hardware during analysis by HPLC or UHPLC, and the peak shape of the solute may be distorted.

In order to prevent the above-mentioned metal coordination adsorption, a technique for forming a metal oxide membrane such as SiO₂ as a protective coating by a vapor phase process on the inner surface of a lumen, a passage, or a cavity of a metallic component having a lumen, a passage, or a cavity has been proposed (Patent Document 1).

In addition, in order to separate a sample by liquid chromatography, in a microfluidic device made by diffusion bonding of metal sheets, a technique for forming an inorganic oxide, typically a metal oxide membrane such as SiO2, by chemical vapor deposition on a surface of the device that is wetted by a mobile phase during separation and further covalently bonding an organic coating containing an organic material having desired hydrophobicity or hydrophilicity so that the interaction between the surface of the device wetted by the mobile phase during separation and an analyte or a sample is reduced or prevented has been proposed (Patent Document 2).

Further, a technique has been proposed in which a column tube for a liquid chromatograph is made of polyether ether ketone (PEEK) resin, and an outer surface thereof is coated with a membrane of a metal species, whereby the above-mentioned metal coordination adsorption is prevented while the column has high pressure resistance (Patent Document 3)

### [Prior art documents]

### [Patent Documents]

[Patent Document 1] JP-A-2015-21965
[Patent Document 2] JP-A-2013-527432
[Patent Document 3] JP-A-2011-106833

### SUMMARY OF THE INVENTION

### [Problems to be solved by the invention]

As disclosed in Patent Document 1, in the case of a metal component in which a metal oxide membrane such as SiO₂ is formed on the inner surface of a lumen, passage, or cavity of the metal component which is a flow path which the mobile phase liquid-contacts, non-specific metal coordination adsorption of a solute in a sample can be reduced as compared with the case where the metal oxide membrane is not formed. However, a plurality of hydroxyl groups exposed on a surface of the formed metal oxide membrane, for example, silanol groups, interact with a metal dissolved in the mobile phase, which causes metal coordination adsorption of a solute in the sample. Therefore, it is not possible to prevent the distortion of the peak shape due to the metal coordination adsorption of the solute. In addition, hydroxyl groups exposed on the surface of the above-mentioned metal oxide membrane may cause non-specific adsorption of a basic solute or a solute having a base in the molecule in a sample, and the peak shape of the solute may be distorted.

In addition, as disclosed in Patent Document 2, in the case of a metal microfluidic device in which an inorganic oxide, typically a metal oxide membrane such as SiO₂, is formed on a surface of the device wetted by a mobile phase, which is a flow path that the mobile phase liquid-contacts, and further, an organic coating containing an organic material having desired hydrophobicity or hydrophilicity is covalently bonded, reducing non-specific metal coordination adsorption of a solute in the sample and reducing hydroxyl groups on the surface of the metal oxide membrane may prevent a peak shape from being distorted due to metal coordination adsorption of a solute and non-specific adsorption of a solute such as a basic solute.

However, in the technique disclosed in Patent Document 2, there is no disclosure or suggestion as to what kind of packing material should be packed in the flow path after applying the organic coating to the flow path, and depending on the type of organic coating, it may have stronger interaction properties than the packing material and may interfere with the elution of solutes in the sample from the flow path. Although C8 or C10 aliphatic hydrocarbon chains are mentioned as an example of the organic coating, when the packing material for performing reversed phase chromatography is butylsilylated silica gel, the hydrophobic interaction properties of the organic coating layer with a hydrophobic solute in the sample may be stronger than those of the packing material. Therefore, the solute in the sample may not elute in the mobile phase optimized for the packing material, and the shape of peak of the solute in the sample may be distorted.

In addition, in the technique disclosed in Patent Document 2, depending on the raw material for forming the metal oxide membrane and the raw material for the organic coating, or the combination of these raw materials, the composition of the membrane formed on the surface of the flow path that the mobile phase liquid-contacts varies, and it is considered that how effectively the above peak shape distortion can be prevented varies. However, Patent Document 2 does not disclose or suggest specific manufacturing conditions such as specific raw materials or a specific combination of raw materials for a membrane formed on the surface of a flow path which the mobile phase liquid-contacts, and it is unclear whether the above peak shape can be prevented from being distorted or how effectively it can be prevented from being distorted.

In addition, as in the technique disclosed in Patent Document 3, when a column tube for a liquid chromatograph is made of polyether ether ketone (PEEK) resin and an outer surface thereof is coated with a membrane of a metal species, it is possible to prevent non-specific metal coordination adsorption of solutes in a sample during analysis by HPLC or UHPLC, but due to the effect of the PEEK resin, a highly hydrophobic solute in a sample may cause non-specific adsorption, and the peak shape of a solute may be distorted.

Accordingly, it is an object of the present invention to prevent non-specific metal coordination adsorption of solutes in a sample and to prevent non-specific adsorption of basic solutes and non-specific hydrophobic adsorption of solutes with strong hydrophobicity while maintaining high pressure resistance using a metal column hardware column during analysis by HPLC or UHPLC. It is another object of the present invention to provide a good peak shape of a solute. It is still another object of the present invention to provide a separation column with the capability of rapid and accurate qualitative and/or quantitative determination of low concentrations of solutes. It is a further object of the present invention to provide column hardware, packed with a chromatographic packing material, that can be used without interfering with the elution of solutes in a sample.

### [Means for Solving the Problems]

According to the present invention, as a means for solving the above problems, a suitable material is used for a liquid-contact portion by mobile phase that comes into liquid-contact with a mobile phase in metallic column hardware to form a membrane containing SiO₂ under suitable production conditions, and further the alkylsilylation of SiO₂ is performed using a suitable material.

Specifically, column hardware for liquid chromatography includes a first membrane of SiO₂ provided on a metallic liquid-contact portion by mobile phase of the column hardware for liquid chromatography, and a second membrane provided on/above the first membrane. The second membrane is produced by alkylsilylation of silanol groups on a SiO₂ surface.

Further, the above-mentioned column hardware for liquid chromatography is characterized in that the second membrane is composed of a membrane produced by alkylsilylation of the silanol groups on the SiO₂ surface of the first membrane.

In addition, the above-mentioned column hardware for liquid chromatography is characterized in that the raw material of the first membrane is one or more selected from the following: an inorganic polysilazane, a tetraalkoxysilane, a methyltrialkoxysilane, a dimethyldialkoxysilane, a trimethylmonoalkoxysilane, an ethyltrialkoxysilane, a diethyldialkoxysilane, a triethylmonoalkoxysilane, a propyltrialkoxysilane, a dipropyldialkoxysilane, a tripropylmonoalkoxysilane, a dimethyl type cyclic siloxane such as hexamethylcyclotrisiloxane or octamethylcyclotetrasiloxane, a diethyl type cyclic siloxane, a dipropyl type cyclic siloxane, a hexamethyldisiloxane, a linear polydimethylsiloxane such as octamethyltrisiloxane or decamethyltetrasiloxane, a linear polydiethylsiloxane, and a linear polydipropylsiloxane.

In addition, the above-mentioned column hardware for liquid chromatography is characterized in that the raw material of the first membrane is one or more selected from the following: perhydropolysilazane, tetramethoxysilane, tetraethoxysilane, tetrapropoxysilane, methyltrimethoxysilane, methyltriethoxysilane, methyltripropoxysilane, dimethyldimethoxysilane, dimethyldiethoxysilane, dimethyldipropoxysilane, trimethylmethoxysilane, trimethylethoxysilane, and trimethylpropoxysilane.

In addition, the above-mentioned column hardware for liquid chromatography is characterized in that the raw material of the second membrane is one or more selected from the following: an alkyltrialkoxysilane, a dialkyldialkoxysilane, and a trialkylmonoalkoxysilane.

In addition, the above-mentioned column hardware for liquid chromatography is characterized in that the raw material of the second membrane is one or more selected from the following: methyltrimethoxysilane, methyltriethoxysilane, methyltripropoxysilane, dimethyldimethoxysilane, dimethyldiethoxysilane, dimethyldipropoxysilane, trimethylmethoxysilane, trimethylethoxysilane, trimethylpropoxysilane, ethyltrimethoxysilane, ethyltriethoxysilane, ethyltripropoxysilane, diethyldimethoxysilane, diethyldiethoxysilane, diethyldipropoxysilane, triethylmethoxysilane, triethylethoxysilane, and triethylpropoxysilane.

Further, the above-mentioned column hardware for liquid chromatography is characterized in that the second membrane is composed of a membrane produced by methylsilylation of the silanol groups on the SiO₂ surface.

Further, the above-mentioned column hardware for liquid chromatography is characterized in that the second membrane is composed of a membrane produced by ethylsilylation of the silanol groups on the SiO₂ surface.

Further, the above-mentioned column hardware for liquid chromatography is characterized in that a column tube constituting the aforementioned column hardware for liquid chromatography has an inner diameter of 1.0 mm or more and a length of 10 m or less.

Further, the above-mentioned column hardware for liquid chromatography is characterized in that a column tube constituting the aforementioned column hardware for liquid chromatography has an inner diameter of 2.1 mm or more.

Further, the above-mentioned column hardware for liquid chromatography is characterized in that the aforementioned first membrane is composed of a first layer composed of one or more kinds of raw materials.

Further, the above-mentioned column hardware for liquid chromatography is characterized in that the aforementioned first membrane is composed of a first layer composed of one or more kinds of raw materials and one or more second layers stacked on the first layer and composed of one or more kinds of raw materials different from the raw material forming the first layer.

Further, the above-mentioned column hardware for liquid chromatography is characterized in that the surface of the aforementioned first membrane is composed of the aforementioned second layer made from dimethyldiethoxysilane as a raw material.

Further, the above-mentioned column hardware for liquid chromatography is characterized in that the strength of the hydrophobic interaction characteristics of the aforementioned second membrane is equal to or lower than the strength of the hydrophobic interaction characteristics of a packing material with which the aforementioned column hardware for liquid chromatography is to be filled.

Further, the above-mentioned column hardware for liquid chromatography is characterized in that the liquid-contact portion by mobile phase of the column hardware for liquid chromatography is coated with a SiO₂ membrane, and a surface of the aforementioned SiO₂ membrane is alkylsilylated.

Further, a separation column for liquid chromatography includes the above-mentioned column hardware for liquid chromatography and a packing material with which the column hardware for liquid chromatography is filled.

Further, a process for producing column hardware for liquid chromatography includes providing a first membrane of SiO₂ on a metallic liquid-contact portion by mobile phase of the column hardware for liquid chromatography, and providing, on/above the first membrane, a second membrane in which silanol groups on a SiO₂ surface are alkylsilylated.

Further, the above-mentioned process for producing column hardware for liquid chromatography is characterized in that the metallic liquid-contact portion by mobile phase of the column hardware for liquid chromatography is coated with the first membrane of SiO₂, and the silanol groups on the SiO₂ surface of the aforementioned first membrane are alkylsilylated to form the second membrane.

Further, the above-mentioned process for producing column hardware for liquid chromatography is characterized in that the raw material of the first membrane is one or more selected from the following: an inorganic polysilazane, a tetraalkoxysilane, a methyltrialkoxysilane, a dimethyldialkoxysilane, a trimethylmonoalkoxysilane, an ethyltrialkoxysilane, a diethyldialkoxysilane, a triethylmonoalkoxysilane, a propyltrialkoxysilane, a dipropyldialkoxysilane, a tripropylmonoalkoxysilane, a dimethyl type cyclic siloxane such as hexamethylcyclotrisiloxane or octamethylcyclotetrasiloxane, a diethyl type cyclic siloxane, a dipropyl type cyclic siloxane, a hexamethyldisiloxane, a linear polydimethylsiloxane such as octamethyltrisiloxane or decamethyltetrasiloxane, a linear polydiethylsiloxane, and a linear polydipropylsiloxane.

Further, the above-mentioned process for producing column hardware for liquid chromatography is characterized in that the raw material of the second membrane is one or more selected from the following: an alkyltrialkoxysilane, a dialkyldialkoxysilane, and a trialkylmonoalkoxysilane.

Further, the above-mentioned process for producing column hardware for liquid chromatography is characterized in that the first membrane is produced in a vacuum with a degree of vacuum of -0.099 MPa or more by diffusing a gas obtained by dilution of the raw material of the first membrane of SiO₂ to bring the raw material into contact with the liquid-contact portion by mobile phase, introducing oxygen and/or ozone into contact with the liquid-contact portion by mobile phase, and performing heating at 300°C or higher for 90 minutes or longer.

Further, the above-mentioned process for producing column hardware for liquid chromatography is characterized in that the second membrane is produced in a vacuum with a degree of vacuum of -0.099 MPa or more by diffusing a gas obtained by dilution of the raw material to bring the raw material into contact with the surface of the first membrane and performing heating at 300°C or higher for 1 hour or longer.

Further, a process for producing a separation column for liquid chromatography includes filling, with a packing material, column hardware for liquid chromatography produced by the above-mentioned process for producing column hardware for liquid chromatography.

### [Effects of the Invention]

According to the present invention as described above, by forming a SiO₂ membrane on the metallic liquid-contact portion by mobile phase of the column hardware and then providing, on the SiO₂ membrane, the second membrane in which the silanol groups on the SiO₂ surface are alkylsilylated, it is possible to prevent, in analysis by HPLC or UHPLC, non-specific metal coordination adsorption of a solute in a sample and non-specific adsorption of a basic solute and non-specific hydrophobic adsorption of a solute with strong hydrophobicity while maintaining high pressure resistance of the column. Further, it is possible to achieve a good solute peak shape. In addition, it is possible to provide a separation column with the capability of qualitatively and/or quantitatively determining a low concentration of solute at high speed and accurately. Further, it is possible to use column hardware packed with a packing material for chromatography without disturbing the elution of a solute in a sample.

### BRIEF DESCRIPTION OF THE DRAWINGS

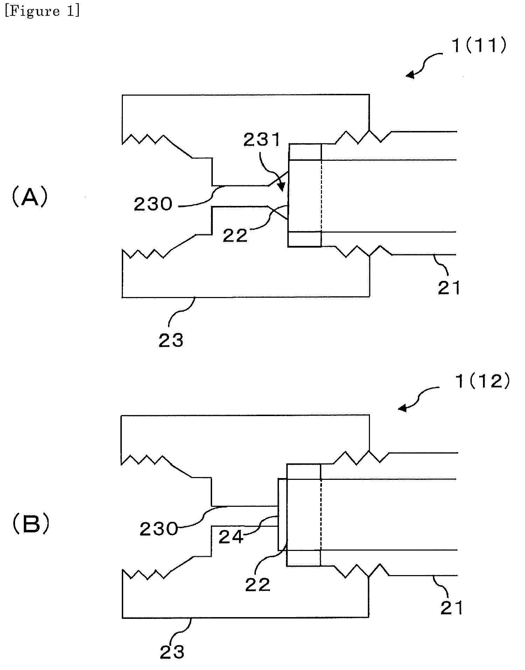

[Figure 1] (A) Schematic diagram of a column hardware inlet side structure including a cone (dispersion space) (B) Schematic diagram of a column hardware inlet side structure including a dispersion plate
[Figure 2]
   (A) Schematic diagram showing a liquid-contact portion by mobile phase of a column hardware inlet side structure including a cone (dispersion space)
   (B) Schematic diagram showing a liquid-contact portion by mobile phase of a column hardware inlet side structure including a dispersion plate
[Figure 3]
   Conceptual diagram of a membrane formed on a liquid-contact portion by mobile phase of column hardware of the present invention
[Figure 4]
   (A) Chromatogram of analysis results using column hardware of the present invention
   (B) Chromatogram of analysis results using column hardware of a comparative example
   (C) Chromatogram of analysis results using column hardware of a comparative example
[Figure 5]
   Chromatogram of analysis results using column hardware of the present invention
[Figure 6]
   (A) Chromatogram of analysis results using column hardware of the present invention
   (B) Chromatogram of analysis results using column hardware of a comparative example
[Figure 7]
   Graph showing the peak area value, relative to that of a comparative example, obtained from analysis results using column hardware of the present invention in which the production time of a second membrane was 2 hours.
[Figure 8]
   Chromatogram of analysis results using column hardware of the present invention
[Figure 9]
   (A) Chromatogram of analysis results using column hardware of the present invention
   (B) Chromatogram of analysis results using column hardware of a comparative example
[Figure 10]
   (A) Chromatogram of analysis results using column hardware of the present invention
   (B) Chromatogram of analysis results using column hardware of a comparative example
   (C) Chromatogram of analysis results using column hardware of a comparative example
[Figure 11]
   (A) Chromatogram of analysis results using column hardware of the present invention
   (B) Chromatogram of analysis results using column hardware of a comparative example
   (C) Chromatogram of the analysis result using column hardware of a comparative example
[Figure 12]
   Chromatogram of analysis results using column hardware of the present invention
[Figure 13]
   (A) Chromatogram of analysis results using column hardware of the present invention
   (B) Chromatogram of analysis results using column hardware of a comparative example
[Figure 14]
   (A) Chromatogram of analysis results using column hardware of the present invention
   (B) Chromatogram of analysis results using column hardware of the present invention
[Fig. 15]
   Chromatogram of analysis results using column hardware of the present invention

### [Description of Embodiments]

Hereinafter, embodiments of the present invention will be described in detail. The present invention is column hardware for liquid chromatography in which a first membrane of SiO₂ is provided on a metallic liquid-contact portion by mobile phase, which is a portion of liquid-contact by a mobile phase containing a sample, of the column hardware for liquid chromatography, and a second membrane in which silanol groups on a SiO₂ surface are alkylsilylated is provided on/above the first membrane. In addition, the present invention is a separation column for liquid chromatography in which the aforementioned column hardware for liquid chromatography is filled with a packing material. In addition, the present invention is a process for producing column hardware for liquid chromatography in which a first membrane of SiO₂ is formed by oxidizing and heating a raw material on a metallic liquid-contact portion by mobile phase of the column hardware for liquid chromatography, and silanol groups on a SiO₂ surface are alkylsilylated on/above the first membrane by heating a raw material to form a second membrane. In addition, the present invention is a process for producing a separation column for liquid chromatography, which is produced by filling the column hardware for liquid chromatography with a packing material.

"Column hardware" refers to components other than a packed bed of a separation column, and refers to components of a separation column including some or all of parts such as a column tube, a frit (filter), an end union, a dispersion plate, a filter assembly, and a filter insert assembly that are parts having a flow path which a mobile phase containing a sample liquid-contacts and passes through. All of the components constituting the column hardware may be made of metal, but a configuration is also possible in which some of the components are made of metal, and some of the other components are made of synthetic resin or the like and are not made of metal.

The term "liquid-contact portion by mobile phase" refers to a portion that a mobile phase (eluent) containing a sample liquid-contacts during analysis by liquid chromatography in column hardware for liquid chromatography. Specifically, the liquid-contact portion by mobile phase includes inner surfaces of a column tube, a frit (filter), an end union, a dispersion plate, a filter assembly, and a filter insert assembly, and outer surfaces of the frit (filter) and the dispersion plate.

The "metallic liquid-contact portion by mobile phase" is a portion of a metallic part which a mobile phase liquid-contacts. The column hardware has a configuration in which the first membrane and the second membrane are stacked on the metallic liquid-contact portion by mobile phase, but may or may not have a configuration in which the first membrane and the second membrane are stacked on a liquid-contact portion by mobile phase of a component which is not made of metal.

Figure 1 shows schematic views of one end of column hardware 1 that does not have a first membrane or a second membrane formed thereon. Although not shown, the column hardware 1 further has a similar configuration at the other end of a column tube 21. Figure 1(A) is a schematic diagram of the structure of an inlet side portion of column hardware 11 including the column tube 21, a frit (filter) 22, an end union 23, and a cone (dispersion space) 231 in an end union internal flow path 230, and the same components are used for the structure on the outlet side of the column hardware 11 to constitute the column hardware 11. Figure 1(B) is a schematic diagram of the structure of an inlet side portion of column hardware 12 including the column tube 21, the frit (filter) 22, the end union 23, and a dispersion plate 24, and the same components are used for the structure of the outlet side of the column hardware 12 to constitute the column hardware 12.

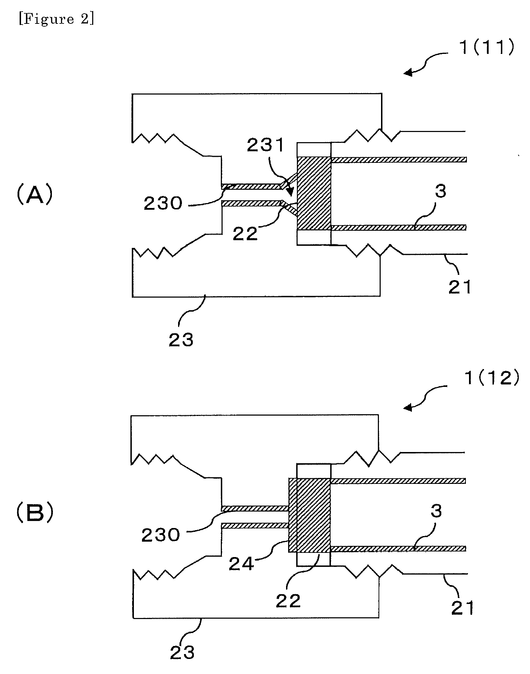

Figure 2(A) is a schematic diagram showing a liquid-contact portion by mobile phase 3 of the inlet side structural portion of the column hardware 11 provided with the cone (dispersion space) 231 shown in Figure 1(A), Figure 2(B) is a schematic diagram showing a liquid-contact portion by mobile phase 3 of the inlet side structural portion of the column hardware 12 including the dispersion plate 24 shown in Figure 1(B). Although not shown in the drawings, the same liquid-contact portion by mobile phase is also formed in the structural portion on the outlet side of the column hardware.

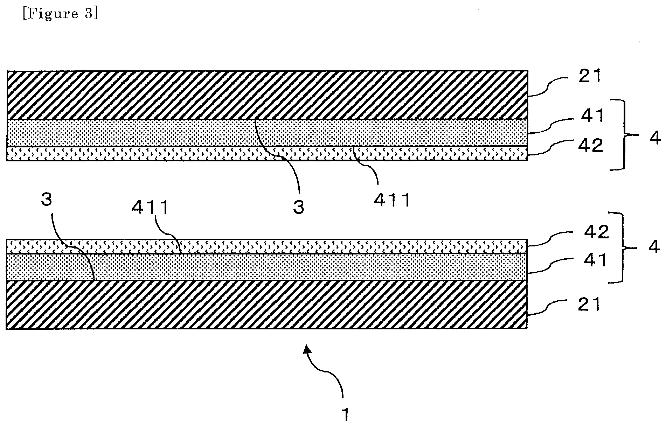

Figure 3 shows a conceptual diagram of a membrane 4 produced on the metallic liquid-contact portion by mobile phase 3 of the column hardware 1. A first membrane 41 is provided on the liquid-contact portion by mobile phase 3, and a second membrane 42 is provided on the first membrane 41. More specifically, the liquid-contact portion by mobile phase 3 is provided with a first membrane 41 of SiO₂ covering the liquid-contact portion by mobile phase 3, and further, a second membrane 42 is provided on the first membrane 41. The second membrane 42 covers the first membrane 41, more specifically covers a surface 411 of the first membrane 41 facing away from the liquid-contact portion by mobile phase 3, and is formed by alkylsilylation of silanol groups on the SiO₂ surface. In this way, the column hardware 1 is constituted by a three-layer structure in which the first membrane 41 is provided on the liquid-contact portion by mobile phase 3 of the column hardware 1 and the second membrane 42 is provided on the surface 411 of the first membrane 41.

Although the first membrane 41 of SiO₂ and a SiO₂ membrane may be composed of 100% by mass of SiO₂, they may be composed of SiO₂ and unavoidable impurities or other components. This is because the first membrane 41 and the SiO₂ membrane are formed by treating a raw material for forming SiO₂ by bringing the raw material into contact with the liquid-contact portion by mobile phase 3, as described later, and therefore, components other than SiO₂ may be included depending on the reaction conditions and the like. Therefore, the first membrane also can be said to be a first membrane including SiO₂.

Even if the first membrane 41 contains components other than SiO₂, it is possible to prevent a sample from contacting the metallic liquid-contact portion by mobile phase 3 as long as the first membrane can cover the liquid-contact portion by mobile phase.

Further, since the second membrane 42 is also made by alkylsilylation of silanol groups on the SiO₂ surface covering the first membrane 41, depending on the reaction conditions and the like, some silanol groups may be left in the second membrane 42.

The first membrane 41, and even the second membrane 42, may or may not be formed on the liquid-contact portion by mobile phase of portions composed of components other than metal.

The first membrane 41 may be composed of a first layer composed of one kind of raw material, but may be composed of a first layer composed of two or more kinds of raw materials. Further, the first membrane 41 may be composed of multiple layers by stacking one or more second layers composed of one or more kinds of raw materials different from the raw materials forming the first layer on the surface of the first layer composed of one or more kinds of raw materials. When multiple layers are stacked in this manner to form a first membrane, it is preferable that the uppermost layer serving as the surface 411 of the first membrane 41 be a membrane made from dimethyldiethoxysilane as a raw material. With such a structure, some of methyl groups derived from dimethyldiethoxysilane remain on the surface of the first membrane, whereby the quantity of silanol groups on the SiO₂ surface of the surface of the first membrane is reduced.

Although the raw material for producing the first membrane 41 is not particularly limited as long as a membrane containing SiO₂ can be produced on the liquid-contact portion by mobile phase 3 by oxidation and heating, it is possible to use one or more kinds of raw materials which are selected from the following: an inorganic polysilazane, a tetraalkoxysilane, a methyltrialkoxysilane, a dimethyldialkoxysilane, a trimethylmonoalkoxysilane, an ethyltrialkoxysilane, a diethyldialkoxysilane, a triethylmonoalkoxysilane, a propyltrialkoxysilane, a dipropyldialkoxysilane, a tripropylmonoalkoxysilane, a dimethyl type cyclic siloxane such as hexamethylcyclotrisiloxane or octamethylcyclotetrasiloxane, a diethyl type cyclic siloxane, a dipropyl type cyclic siloxane, a hexamethyldisiloxane, a linear polydimethylsiloxane such as octamethyltrisiloxane or decamethyltetrasiloxane, a linear polydiethylsiloxane, and a linear polydipropylsiloxane. Since these raw materials are readily available and commonly used, using them is preferred.

Although there is no particular limitation on the inorganic polysilazane, perhydropolysilazane can be used.

Although there is no particular limitation on the tetraalkoxysilane, tetramethoxysilane, tetraethoxysilane, and tetrapropoxysilane can be used. Ethoxy groups have a higher reactivity for dealcohol condensation than propoxy groups, and methoxy groups have a higher reactivity for dealcohol condensation than ethoxy groups. The higher the reactivity for dealcohol condensation, the more easily the first membrane 41 can be produced, and the thicker the membrane can be made if the production conditions are the same; therefore, tetraethoxysilane is preferable over tetrapropoxysilane, and tetramethoxysilane is preferable over tetraethoxysilane. On the other hand, considering the toxicity of an alcohol which is a by-product of dealcohol condensation, tetraethoxysilane is preferred because ethanol is its by-product.

Although there is no particular limitation on the methyltrialkoxysilane, methyltrimethoxysilane, methyltriethoxysilane, and methyltripropoxysilane can be used. Ethoxy groups have a higher reactivity for dealcohol condensation than propoxy groups, and methoxy groups have a higher reactivity for dealcohol condensation than ethoxy groups. The higher the reactivity for dealcohol condensation, the more easily the first membrane 41 can be produced, and the thicker the membrane can be made if the production conditions are the same; therefore, methyltriethoxysilane is preferable over methyltripropoxysilane, and methyltrimethoxysilane is preferable over methyltriethoxysilane. On the other hand, considering the toxicity of an alcohol which is a by-product of dealcohol condensation, methyltriethoxysilane is preferred because ethanol is its by-product.

Although there is no particular limitation on the dimethyldialkoxysilane, dimethyldimethoxysilane, dimethyldiethoxysilane, and dimethyldipropoxysilane can be used. Ethoxy groups have a higher reactivity for dealcohol condensation than propoxy groups, and methoxy groups have a higher reactivity for dealcohol condensation than ethoxy groups. The higher the reactivity for dealcohol condensation, the more easily the first membrane 41 can be produced, and the thicker the membrane can be made if the production conditions are the same; therefore, dimethyldiethoxysilane is preferable over dimethyldipropoxysilane, and dimethyldimethoxysilane is preferable over dimethyldiethoxysilane. On the other hand, considering the toxicity of an alcohol which is a by-product of dealcohol condensation, dimethyldiethoxysilane is preferred because ethanol is its by-product.

Further, although there is no particular limitation on the trimethylmonoalkoxysilane, trimethylmethoxysilane, trimethylethoxysilane, and trimethylpropoxysilane can be used. Ethoxy groups have a higher reactivity for dealcohol condensation than propoxy groups, and methoxy groups have a higher reactivity for dealcohol condensation than ethoxy groups. The higher the reactivity for dealcohol condensation, the more easily the first membrane 41 can be produced, and the thicker the membrane can be made if the production conditions are the same; therefore, trimethylethoxysilane is preferable over trimethylpropoxysilane, and trimethylmethoxysilane is preferable over trimethylethoxysilane. On the other hand, considering the toxicity of an alcohol which is a by-product of dealcohol condensation, trimethylethoxysilane is preferred because ethanol is its by-product.

Since tetraalkoxysilanes, methyltrialkoxysilanes, and dimethyldialkoxysilanes have a plurality of alkoxy groups, a membrane containing SiO₂ as a main component is easily produced by dealcohol condensation between a plurality of molecules. Therefore, from this viewpoint, a membrane containing SiO₂ as a main component is easily produced in the order of tetraalkoxysilanes, methyltrialkoxysilanes, and dimethyldialkoxysilanes. On the other hand, as described above, when some of methyl groups derived from the raw material remain on the surface of the first membrane, the amount of silanol groups on the SiO₂ surface of the surface of the first membrane is reduced. When this viewpoint is also taken into account, methyltrialkoxysilanes and dimethyldialkoxysilanes, which have a plurality of alkoxy groups in the molecule for dealcohol condensation of a plurality of molecules and have a methyl group in the molecule, are preferred.

Among perhydropolysilazane, methyltriethoxysilane, and dimethyldiethoxysilane, dimethyldiethoxysilane is preferred from the results of Examples 1 to 3 described later.

The raw material for producing the second membrane 42 is not particularly limited as long as it can be used to perform alkylsilylation by a condensation reaction by heating of silanol groups on the SiO₂ surface of the first membrane 41 and the raw material. One or more raw materials selected from a hexaalkyldisiloxane, a dialkylpolysiloxane, a so-called linear polydialkylsiloxane, a dialkyl type cyclic siloxane, an alkyltrihalosilane, a dialkyldihalosilane, a trialkylmonohalosilane, hexamethyldisilazane, N-trimethylsilylimidazole, an alkyltrialkoxysilane, a dialkyldialkoxysilane, and a trialkylmonoalkoxysilane can be used. For optimizing the conditions for dense alkylsilylation by condensing the raw material with the silanol groups on the SiO₂ surface of the first membrane of the column hardware, it is easier to optimize the conditions by diffusing a raw material diluted with an inert gas and adjusting the concentration and heating time of the raw material. Also, the by-products of condensation should not be high-risk acids, bases, etc., such as hydrogen halides, ammonia, and imidazole. Therefore, it is preferable to use one or more raw materials selected from an alkyltrialkoxysilane, a dialkyldialkoxysilane, and a trialkylmonoalkoxysilane.

Although there is no particular limitation on the alkyltrialkoxysilane, the dialkyldialkoxysilane, and the trialkylmonoalkoxysilane, the shorter the alkyl group in the molecule as a raw material, the less steric hindrance occurs when the silanol groups on the SiO₂ surface of the first membrane 41 are alkylsilylated, and the coverage of alkylsilylation is increased; therefore, a methyltrialkoxysilane, a dimethyldialkoxysilane, and a trimethylmonoalkoxysilane are most preferred, and an ethyltrialkoxysilane, a diethyldialkoxysilane, and a triethylmonoalkoxysilane are the second most preferred.

Although there is no particular limitation on the methyltrialkoxysilane, methyltrimethoxysilane, methyltriethoxysilane, and methyltripropoxysilane can be used. Ethoxy groups have a higher reactivity for dealcohol condensation with silanol groups on the SiO₂ surface of the first membrane than propoxy groups, and methoxy groups have a higher reactivity for dealcohol condensation with silanol groups on the SiO₂ surface of the first membrane than ethoxy groups. The higher the reactivity for dealcohol condensation, the more easily the second membrane 42 can be produced, and the coverage of the first membrane can be increased. Since among these compounds methyltripropoxysilane requires the highest energy for the dealcohol condensation reaction, methyltriethoxysilane is preferable over methyltripropoxysilane, and methyltrimethoxysilane is preferable over methyltriethoxysilane. On the other hand, considering the toxicity of an alcohol which is a by-product of dealcohol condensation, methyltriethoxysilane is preferred because its by-product is ethanol.

Although there is no particular limitation on the ethyltrialkoxysilane, ethyltrimethoxysilane, ethyltriethoxysilane, and ethyltripropoxysilane can be used. Ethoxy groups have a higher reactivity for dealcohol condensation with silanol groups on the SiO₂ surface of the first membrane than propoxy groups, and methoxy groups have a higher reactivity for dealcohol condensation with silanol groups on the SiO₂ surface of the first membrane than ethoxy groups. The higher the reactivity for dealcohol condensation, the more easily the second membrane 42 can be produced, and the coverage of the first membrane can be increased. Since among these compounds ethyltripropoxysilane requires the highest energy for the dealcohol condensation reaction, ethyltriethoxysilane is preferable over ethyltripropoxysilane, and ethyltrimethoxysilane is preferable over ethyltriethoxysilane. On the other hand, considering the toxicity of an alcohol which is a by-product of dealcohol condensation, ethyltriethoxysilane is preferred because its by-product is ethanol.

Although there is no particular limitation on the dimethyldialkoxysilane, dimethyldimethoxysilane, dimethyldiethoxysilane, and dimethyldipropoxysilane can be used. Ethoxy groups have a higher reactivity for dealcohol condensation with silanol groups on the SiO₂ surface of the first membrane than propoxy groups, and methoxy groups have a higher reactivity for dealcohol condensation with silanol groups on the SiO₂ surface of the first membrane than ethoxy groups. The higher the reactivity for dealcohol condensation, the more easily the second membrane 42 can be produced, and the coverage of the first membrane can be increased. Therefore, dimethyldiethoxysilane is preferable over dimethyldipropoxysilane, and dimethyldimethoxysilane is preferable over dimethyldiethoxysilane. On the other hand, considering the toxicity of an alcohol which is a by-product of dealcohol condensation, dimethyldiethoxysilane is preferred because its by-product is ethanol.

Although there is no particular limitation on the diethyldialkoxysilane, diethyldimethoxysilane, diethyldiethoxysilane, and diethyldipropoxysilane can be used. Ethoxy groups have a higher reactivity for dealcohol condensation with silanol groups on the SiO₂ surface of the first membrane than propoxy groups, and methoxy groups have a higher reactivity for dealcohol condensation with silanol groups on the SiO₂ surface of the first membrane than ethoxy groups. The higher the reactivity for dealcohol condensation, the more easily the second membrane 42 can be produced, and the coverage of the first membrane can be increased. Therefore, diethyldiethoxysilane is preferable over diethyldipropoxysilane, and diethyldimethoxysilane is preferable over diethyldiethoxysilane. On the other hand, considering the toxicity of an alcohol which is a by-product of dealcohol condensation, diethyldiethoxysilane is preferred because its by-product is ethanol.

Although there is no particular limitation on the trimethylmonoalkoxysilane, trimethylmethoxysilane, trimethylethoxysilane, and trimethylpropoxysilane can be used. Ethoxy groups have a higher reactivity for dealcohol condensation with silanol groups on the SiO₂ surface of the first membrane than propoxy groups, and methoxy groups have a higher reactivity for dealcohol condensation with silanol groups on the SiO₂ surface of the first membrane than ethoxy groups. The higher the reactivity for dealcohol condensation, the more easily the second membrane 42 can be produced, and the coverage of the first membrane can be increased. Therefore, trimethylethoxysilane is preferable over trimethylpropoxysilane, and trimethylmethoxysilane is preferable over trimethylethoxysilane. On the other hand, considering the toxicity of an alcohol which is a by-product of dealcohol condensation, trimethylethoxysilane is preferred because its by-product is ethanol.

Although there is no particular limitation on the triethylmonoalkoxysilane, triethylmethoxysilane, triethylethoxysilane, and triethylpropoxysilane can be used. Ethoxy groups have a higher reactivity for dealcohol condensation with silanol groups on the SiO₂ surface of the first membrane than propoxy groups, and methoxy groups have a higher reactivity for dealcohol condensation with silanol groups on the SiO₂ surface of the first membrane than ethoxy groups. The higher the reactivity for dealcohol condensation, the more easily the second membrane 42 can be produced, and the coverage of the first membrane can be increased. Therefore, triethylethoxysilane is preferable over triethylpropoxysilane, and triethylmethoxysilane is preferable over triethylethoxysilane. On the other hand, considering the toxicity of an alcohol which is a by-product of dealcohol condensation, triethylethoxysilane is preferred because its by-product is ethanol.

Among dimethyldiethoxysilane and trimethylethoxysilane, dimethyldiethoxysilane is preferred from the results of Example 3 and Example 9 described later.

Next, the production of the first membrane will be described. In the production of the first membrane, in order to bring the raw material into contact with the liquid-contact portion by mobile phase of the column hardware, a raw material diluted with a solvent may be applied, or a raw material diluted with an inert gas may be diffused. In the production of the first membrane on the liquid-contact portion by mobile phase of the column hardware, depending on the production method, a membrane may be produced not only on the liquid-contact portion by mobile phase but also on the surface of the column hardware including the liquid-contact portion by mobile phase, for example, on the outer surface of the column tube, or the like.

When the raw material does not have an alkyl group (methyl group, etc.) directly covalently bonded to the Si atom, such as an inorganic polysilazane or a tetraalkoxysilane, the first membrane may be produced by applying or diffusing the raw material in air, in an inert atmosphere, or in a vacuum to bring the raw material into contact with the liquid-contact portion by mobile phase of the column hardware and carrying out oxidation and condensation with oxygen in air only by heating in air. Further, instead of oxidation and condensation by the step of only heating in air, oxidation and condensation by supplying oxygen and/or ozone and heating may be performed in air, in an inert atmosphere, or in a vacuum. Furthermore, when heating is carried out in air, it is preferable to carry out heating in air at 250°C. or higher for 3 hours or longer so that the production of the first membrane by the condensation reaction can be promoted.

Further, when the raw material has a methyl group directly covalently bonded to the Si atom, such as a methyltrialkoxysilane, a dimethyldialkoxysilane, or a trimethylmonoalkoxysilane, the first membrane may be produced by applying or diffusing the raw material in air, in an inert atmosphere, or in a vacuum to bring the raw material into contact with the liquid-contact portion by mobile phase of the column hardware and carrying out oxidation and condensation by supplying oxygen and/or ozone and heating in air, in an inert atmosphere, or in a vacuum.

Furthermore, when the raw material has an ethyl group directly covalently bonded to the Si atom, such as an ethyltrialkoxysilane, a diethyldialkoxysilane, or a triethylmonoalkoxysilane, the first membrane may be produced by applying or diffusing the raw material in air, in an inert atmosphere, or in a vacuum to bring the raw material into contact with the liquid-contact portion by mobile phase of the column hardware and carrying out oxidation and condensation by supplying oxygen and/or ozone and heating in air, in an inert atmosphere, or in a vacuum.

Further, when the raw material has a propyl group directly covalently bonded to the Si atom, such as a propyltrialkoxysilane, a dipropyldialkoxysilane, or a tripropylmonoalkoxysilane, the first membrane may be produced by applying or diffusing the raw material in air, in an inert atmosphere, or in a vacuum to bring the raw material into contact with the liquid-contact portion by mobile phase of the column hardware and carrying out oxidation and condensation by supplying oxygen and/or ozone and heating in air, in an inert atmosphere, or in a vacuum.

The first membrane is preferably produced by diffusing the raw material in a vacuum with a degree of vacuum of -0.099 MPa or more to bring the raw material into contact with the surface of the liquid-contact portion by mobile phase of the column hardware and performing oxidation with oxygen and/or ozone and heating at 300°C. or more in a vacuum with a degree of vacuum of -0.099 MPa or more for 90 minutes or more. This is because by performing this process, it is possible to produce a first membrane under conditions without absolute vacuum, and by performing oxidation with oxygen and/or ozone and heating at 300°C. or higher, it is possible to promote the production of the first membrane by a condensation reaction. In addition, by performing oxidation with oxygen and/or ozone and heating at 300°C. or higher for 90 minutes or more, it is possible to reduce the effect of the metal in the liquid-contact portion by mobile phase of the metallic column hardware.

Furthermore, in the case of column hardware having a small inner diameter and a large length, when the raw material has a methyl group directly covalently bonded to the Si atom, such as a methyltrialkoxysilane, a dimethyldialkoxysilane, or a trimethylmonoalkoxysilane, the first membrane can be produced in a vacuum with a degree of vacuum of -0.099 MPa or more by diffusing the raw material to bring the raw material into contact with the surface of the liquid-contact portion by mobile phase of the column hardware and carrying out oxidation with oxygen and/or ozone and heating at 300°C. or higher for 4 hours or more.

In the production of the first membrane, a first membrane can be produced with one kind of raw material, but a first membrane composed of one layer can be produced with two or more kinds of raw materials. Further, the first membrane can be produced by stacking one or more second layers made from one or more raw materials different from the raw material of the first layer on the first layer produced from one or more raw materials. When a first membrane is produced by stacking a plurality of layers in this manner, it is preferable that the uppermost layer serving as the surface of the first membrane be made from dimethyldiethoxysilane as the raw material. This is because the amount of silanol groups on the SiO₂ surface of the surface of the first membrane decreases when some of the methyl groups derived from dimethyldiethoxysilane remain on the surface of the first membrane.

Further, in the production of the first membrane, with respect to the diffusion of a raw material diluted with an inert gas into the column tube included in the column hardware for liquid chromatography, since the column tube is a cylindrical tube, the smaller the inner diameter of the column tube is, and the larger the length of the column tube is, the more difficult the diffusion of the raw material becomes, and it is necessary to increase the time for heating in air or for oxidation and heating in air or in a vacuum for the production of the first membrane. For example, in the case of a column tube with an inner diameter of 1.0 mm and a length of 10 m, oxidation and heating may be carried out for 4 hours in order to obtain the same performance as a column tube having an inner diameter of 2.1 mm and a length of 5 cm or a column tube having an inner diameter of 2.1 mm and a length of 15 cm on which a first membrane is produced by oxidation and heating for 90 minutes.

Further, in column hardware using a column tube having an inner diameter of 2.1 mm, a frit having a thickness of 1 mm and a pore diameter of 1.9 µm or less can be used, and even with a frit having a very small pore size as described above, a first membrane for obtaining desired performance can be produced by oxidation and heating for 90 minutes. Even for column hardware with an inner diameter of 1.0 mm, if the diameter of packing material is 1.9 µm, a frit having the same thickness and pore size as that used for the column hardware using the column tube with an inner diameter of 2.1 mm described above can be used.

In column hardware using a column tube with an inner diameter of 2.1 mm, an end union having an internally processable flow path with the smallest inner diameter can be used, and a first membrane for the desired performance can be produced in the flow path in the end union by oxidation and heating for 90 minutes. Even in column hardware in which the inner diameter of the column tube is 1.0 mm, it is possible to use an end union having a flow path with the same inner diameter and length as the flow path in the end union used in the column hardware using the column tube having an inner diameter of 2.1 mm as described above.

In other words, by performing oxidation and heating for 4 hours on the liquid-contact portion by mobile phase of a column tube having an inner diameter of 1.0 mm and a length of 10 m, it is possible to produce a first membrane for obtaining the same performance as a first membrane produced by performing oxidation and heating for 90 minutes on the liquid-contact portion by mobile phase of a column tube having an inner diameter of 2.1 mm and a length of 5 cm and on the liquid-contact portion by mobile phase of a column tube having an inner diameter of 2.1 mm and a length of 15 cm.

Next, the production of the second membrane 42 will be described. The second membrane 42 can be produced by alkylsilylation, including methylsilylation and ethylsilylation, of silanol groups on the SiO₂ surface of the surface part of the first membrane 41 containing SiO₂. Further, in order to produce the second membrane, a SiO₂ membrane may be produced separately from the first membrane on the surface 411 of the first membrane 41. For example, a membrane containing SiO₂ can be produced separately from the first membrane on the surface 411 of the first membrane 41 by applying and heating a raw material dissolved in a solvent, or by physical vapor deposition of the raw material, or the like, and silanol groups on the SiO₂ surface of the surface part of the produced membrane containing SiO₂ can be subjected to alkylsilylation, including methylsilylation and ethylsilylation, for production of the second membrane. In addition, "on/above the first membrane" includes a configuration in which, as shown in Figure 3, the second membrane 42 is provided directly on the surface 411 of the first membrane 41, and also includes a configuration in which another membrane is provided between the surface of the first membrane and the second membrane, that is, 3 or more membranes are stacked. For example, a third membrane having a composition different from SiO₂ can be produced on the surface 411 of the first membrane 41, a membrane containing SiO₂ can be produced on the surface of the third membrane, and a second membrane can be produced above the first membrane by alkylsilylation, including methylsilylation and ethylsilylation, of silanol groups on the SiO₂ surface of the surface portion of the produced membrane containing SiO₂. In the production of the second membrane, the raw material can be brought into contact with the surface 411 of the first membrane of the column hardware, the surface of the membrane containing SiO₂ different from the first membrane produced on the surface 411 of the first membrane, or the surface of the membrane containing SiO₂ produced on the surface of the third membrane, by diffusing a raw material diluted with an inert gas or by applying a raw material diluted with a solvent. It is sufficient that the second membrane covers the first membrane on the liquid-contact portion by mobile phase, but depending on the process of producing the first membrane and the process of producing the second membrane, the second membrane may be produced not only on the liquid-contact portion by mobile phase, but also on the first membrane produced on the surface of the column hardware including the liquid-contact portion by mobile phase.

The second membrane can be produced by applying or diffusing a raw material in air, in an inert atmosphere, or in a vacuum to bring the raw material into contact with the surface of the first membrane and heating the raw material in an inert atmosphere or in a vacuum, but it is preferable that the raw material be diffused and brought into contact with the surface of the first membrane in a vacuum and then heated in a vacuum. This is because, according to such a process, the probability that the raw material comes into contact with the surface of the first membrane is increased, and the production of the second membrane by the condensation reaction can be promoted.

Further, in the production of the second membrane, it is preferable that the raw material be diffused and brought into contact with the surface of the first membrane in a vacuum with a degree of vacuum of -0.099 MPa or more and be heated at 300°C. or more for 1 hour or more in a vacuum with a degree of vacuum of -0.099 MPa or more. This is because by using such a process, a second membrane can be produced under conditions that do not include absolute vacuum, and heating at 300°C. or higher can promote the formation of the second membrane by condensation reactions and can also promote the dehydration condensation of silanol groups with each other on the surface of the first membrane. Further, by performing heating at 300°C. or higher for 1 hour or more, it is possible to reduce the non-specific adsorption of solutes in the sample, and to produce column hardware suitable for accurate qualitative and/or quantitative determination of low concentrations of solutes in the sample.

Further, in the production of the second membrane, it is more preferable that the raw material be diffused and brought into contact with the surface of the first membrane in a vacuum with a degree of vacuum of -0.099 MPa or more and be heated at 300°C. or more for 2 hours or more in a vacuum with a degree of vacuum of -0.099 MPa or more. This is because by using such a process, it is possible to produce a second membrane under conditions without absolute vacuum, and by heating at 300°C. or higher, the production of the second membrane by condensation reaction can be promoted, and dehydration and condensation of silanol groups with each other on the surface of the first membrane can also be promoted. In addition, by heating at 300°C. or higher for 2 hours or longer, it is possible to prevent non-specific adsorption of solutes in the sample, and to produce column hardware suitable for accurate qualitative and/or quantitative determination of low concentrations of solutes in the sample.

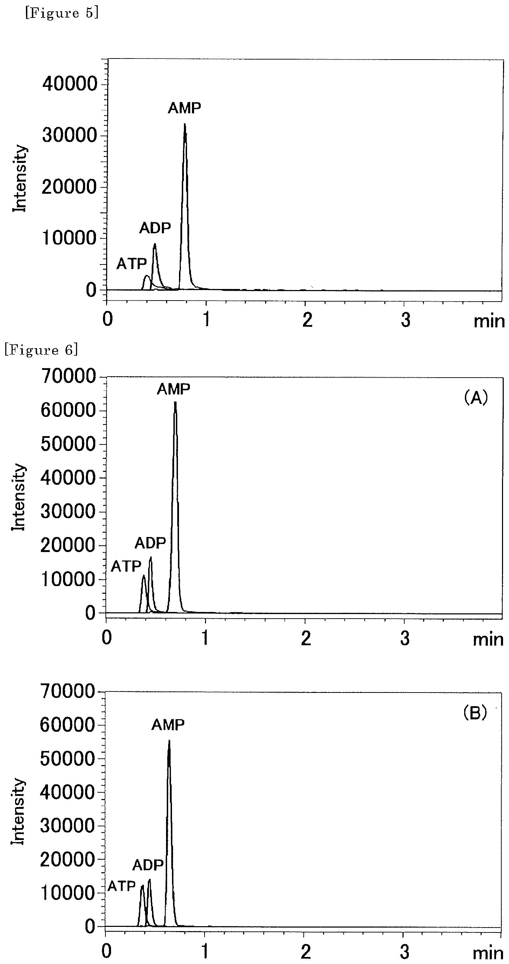

In addition, in the production of the first membrane and the second membrane, among the production conditions of the first membrane and the second membrane of Example 3 to be described later, a column for UHPLC was produced with only the heating temperature during the production of the first membrane changed from 300°C to 350°C, and a chromatogram was collected and evaluated under the same conditions as in Figure 6(A). Although the chromatogram is not shown, peak shapes and peak heights similar to those of Figure 6(A) were obtained.

In addition, in the production of the first membrane and the second membrane, among the production conditions of the first membrane and the second membrane of Example 3 to be described later, a column for UHPLC was produced with only the heating temperature during the production of the second membrane changed from 300°C to 350°C, and a chromatogram was collected and evaluated under the same conditions as in Figure 6(A). Although the chromatogram is not shown, peak shapes and peak heights similar to those of Figure 6(A) were obtained.

When the vacuum chamber used to produce the first membrane or the second membrane is composed of a plurality of parts, a sealing material such as an O-ring is often used to maintain the degree of vacuum in the vacuum chamber. There are vulcanized rubbers and fluorocarbon rubbers such as perfluoroelastomers as resin materials of commercially available general-purpose sealing materials which have elasticity and stretchability to easily maintain the degree of vacuum in the vacuum chamber and have a high heat-resistant temperature. Since the heat-resistant temperature of these resin materials is 330°C, even if a sealing material made of such a resin material is used, it is possible to produce the first membrane or the second membrane a plurality of times without frequently replacing the sealing material as long as the heating temperature during the production of the first membrane or the second membrane is 300°C.

When the heating temperature during the production of the first membrane or the second membrane exceeds 350°C or is 400°C or more, when a commercially available general-purpose sealing material made of a resin material as mentioned above is used, thermal aging of the sealing material is apt to occur, and in order to maintain the degree of vacuum in the vacuum chamber during the production of the first membrane or the second membrane, it is necessary to frequently replace the sealing material. Further, even if a sealing material made of a highly heat-resistant metallic material is used, the metallic material has low restoring stress and elasticity; therefore, once the degree of vacuum in the vacuum chamber is decreased, in order to increase the degree of vacuum next after putting column hardware on which the first membrane or the second membrane is to be produced into the vacuum chamber, it is necessary to replace the sealing material made of the above-mentioned metallic material with a new one.

Further, in the production of the first membrane, when a UHPLC column was produced with only the heating temperature during the production of the first membrane changed from 300°C to 400°C among the production conditions of the first membrane and the second membrane of Example 3 described later, the external surface of the column hardware was discolored prior to the production of the first membrane on the external surface of the column hardware. Thus, the appearance of the external surface of the column hardware became dirty, and polishing was required to improve the appearance.

From the above, the heating temperatures during the production of the first membrane and the second membrane are each preferably 300°C or higher. In addition, the heating temperature during the production of the first membrane is preferably 300°C or more and less than 400°C in consideration of the effect obtained by a heating temperature greatly exceeding 300°C and the appearance of the outer surface of the column hardware or the cost, time, and effort for improving the appearance.

In addition, in consideration of the effect obtained by a heating temperature greatly exceeding 300°C and the cost, time, effort, energy efficiency, or the like of replacing the sealing material, the heating temperature during the production of the first membrane or the second membrane is preferably at most 350°C. or less, which is an allowable range in which the frequency of replacing a commercially available general-purpose sealing material made of a resin material is not so high, and more preferably 330°C or less, which is a heat-resistant temperature of a commercially available general-purpose sealing material made of a resin material, and more preferably between 300°C and 320°C.

Next, the main interaction characteristics of the second membrane and the main interaction characteristics of the packing material for liquid chromatography packed in the column hardware will be explained. Among packing materials for liquid chromatography, a typical one is a packing material for reversed phase chromatography, and octadecylsilylated silica gel (ODS-modified silica gel) is often used as a packing material for reversed phase chromatography. The main interaction characteristics of ODS-modified silica gel are hydrophobic interaction properties due to octadecyl groups, and the higher the hydrophobic properties of a solute in a sample, the more slowly it elutes from the column. The main interaction characteristics of the second membrane are hydrophobic interaction properties due to alkyl groups, and if the alkyl groups of the second membrane are not octadecyl groups or alkyl groups shorter than octadecyl groups, the main interaction characteristics of the second membrane surpass the main interaction characteristics of the packing material (ODS-modified silica gel), and in a mobile phase optimized for the packing material (ODS-modified silica gel), some solutes in the sample may not be eluted. In addition, the shorter the alkyl groups of the second membrane, the smaller the influence of changing the strength of the hydrophobicity of the column due to the octadecyl groups of the packing material. From these viewpoints, the alkyl groups of the second membrane are most preferably methyl groups, and ethyl groups are the second most preferred.

Further, as packing materials for reversed phase chromatography, in addition to ODS-modified silica gel, packing materials based on silica gel such as methylsilylated silica gel, butylsilylated silica gel, cyanopropylsilylated silica gel, phenylsilylated silica gel, octylsilylated silica gel, docosylsilylated silica gel, octacosylsilylated silica gel, triacontylsilylated silica gel, and the like have been used. Also for column hardware packed with these packing materials, methyl groups are suitable as the alkyl groups of the second membrane because their hydrophobic interaction properties do not exceed the hydrophobic interaction properties due to the functional groups of the packing material and have little effect of changing the strength of the hydrophobicity of the column. For column hardware packed with packing materials other than methylsilylated silica gel, as the alkyl groups of the second membrane, methyl groups are most preferred, and ethyl groups are the second most preferred.

In addition, packing materials containing polymers as base materials are used for packing materials for reversed phase chromatography, such as a styrene divinylbenzene copolymer, a polymethacrylate, a polyvinyl alcohol modified by butyl groups, a polyvinyl alcohol modified by octyl groups, a polyvinyl alcohol modified by octadecyl groups, and the like. As for column hardware packed with these packing materials, since the influence of changing the strength of the hydrophobicity of columns due to the packing materials is little, as the alkyl groups of the second membrane, methyl groups are most preferable, and ethyl groups are the second most preferable.

In addition, there are packing materials for hydrophilic interaction chromatography (HILIC) and packing materials for normal phase chromatography, and packing materials having high hydrophilicity (unmodified silica gel, dihydroxypropylsilylated silica gel, aminopropylsilylated silica gel, and the like) are used in common as such packing materials for liquid chromatography. Further, as packing materials for HILIC, silica gel modified with amide groups or carbamoyl groups and the like, which are highly hydrophilic packing materials, have been used. The main interaction characteristics of highly hydrophilic packing materials are hydrophilic interaction properties, and among solutes in a sample, more hydrophilic solutes elute more slowly from the column. Since only very small amounts of functional groups having hydrophilic interaction (silanol or the like) remain on the second membrane and the alkyl groups have no hydrophilic interaction characteristics, regardless of the length of the alkyl groups of the second membrane, the influence on the main interaction characteristics of the packing material having high hydrophilicity is small; however, when the alkyl groups of the second membrane are long, strong hydrophobic interaction characteristics are added to the column. Therefore, from this viewpoint, the alkyl groups of the second membrane are most preferably methyl groups, and ethyl groups are the second most preferred.

In addition, packing materials for liquid chromatography include packing materials for size exclusion chromatography (SEC), packing materials for ion exchange chromatography, packing materials for ligand exchange chromatography, packing materials for ion exclusion chromatography, and the like. Regardless of the length of the alkyl groups of the second membrane, the effect of the alkyl groups of the second membrane on the main interaction characteristics of any packing material is small. However, if the alkyl groups of the second membrane are long, strong hydrophobic interaction properties are added to the column. Therefore, from this point of view, the alkyl groups of the second membrane are most preferably methyl groups, and the second most preferably ethyl groups.

The column hardware for liquid chromatography described above is filled with a packing material to constitute a separation column for liquid chromatography. In addition, it is possible to manufacture a separation column for liquid chromatography by filling, with a packing material, column hardware for liquid chromatography produced by the process of producing the column hardware for liquid chromatography described above. The packing material is not particularly limited and can be appropriately selected from packing materials used in liquid chromatography. Further, the method of packing the packing material is not particularly limited, and known packing methods can be employed.

### [EXAMPLES]

Hereinafter, the column hardware and the separation column of the present invention and the process of producing the column hardware and the separation column will be described as examples in comparison with comparative examples.

### EXAMPLE 1

A first membrane was produced using perhydropolysilazane as a raw material on the liquid-contact portion by mobile phase of stainless-steel column hardware of a general-purpose UHPLC column, followed by the production of a second membrane, that is, methylsilylation of the surface of the first membrane.

More specifically, column hardware for two columns was prepared by producing a first membrane using perhydropolysilazane as a raw material on the liquid-contact portion by mobile phase of column hardware made of stainless steel. A solution of perhydropolysilazane in isopropyl alcohol (1.0%, w/v) was made in a 1000 mL tall beaker, and stainless steel column hardware (2 column tubes having an inner diameter of 2.1 mm and a length of 5 cm, 4 frits, and 4 end unions) was submerged. Ultrasonic treatment was performed for 3 minutes, and the column hardware was removed and dried at room temperature for 12 hours on a laboratory table laid with an industrial paper wiper. The dried column hardware was transferred into an oven stabilized at 250°C and heat-treated at 250°C for 3 hours.

The production of the second membrane using chemical vapor deposition, that is, the methylsilylation of the surface of the first membrane, was performed on the column hardware in which the production of the first membrane using perhydropolysilazane as a raw material was completed on the liquid-contact portion by mobile phase of the column hardware made of stainless steel. The column hardware for one column on which the first membrane had been produced was placed in a vacuum chamber, the door of the vacuum chamber was closed, and the vacuum chamber was heated and stabilized at 300°C. The degree of vacuum of the vacuum chamber was stabilized at -0.099 MPa. Subsequently, a gas in which dimethyldiethoxysilane (DMDES) was diluted to 0.05% with nitrogen was introduced into the vacuum chamber at 200 seem (sccm: standard cc/min, indicating a gas flow rate per minute at 1 atm and 25°C) and reacted for 2 hours.

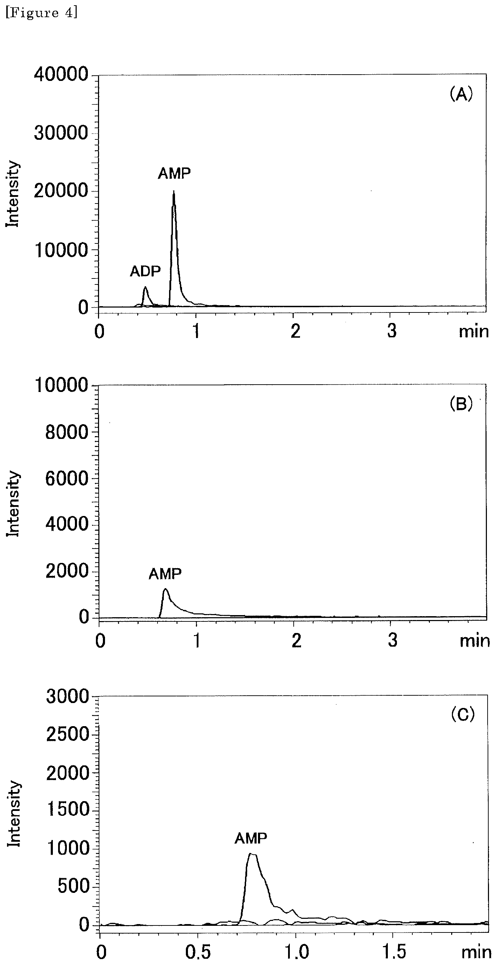

Octadecylsilylated silica gel (InertSustainSwift C18, 1.9 µm, GL Sciences Inc.) was packed into the column hardware after the production of the first membrane and the methylsilylation of the surface of the first membrane (production of the second membrane) to prepare a column having an inner diameter of 2.1 mm and a length of 5 cm. Using the prepared column, compounds having metal coordination properties and having a base were analyzed under the following conditions, and the peak shape was confirmed (Figure 4(A)).

As a comparative example, only a first membrane was produced using perhydropolysilazane as a raw material on the liquid-contact portion by mobile phase of column hardware made of stainless steel, and the column hardware was filled with the same octadecylsilylated silica gel as in the example to produce a column having an inner diameter of 2.1 mm and a length of 5 cm. Analysis of compounds having metal coordination properties and having a base was performed (Figure 4(B)). In addition, as a comparative example, untreated stainless steel column hardware was filled with the same octadecylsilylated silica gel as in the example to produce a column having an inner diameter of 2.1 mm and a length of 5 cm, and analysis of compounds having metal coordination properties and having a base was performed (Figure 4(C)).

For the analysis, a UHPLC device Nexera (Shimadzu Corporation) was used, and a mobile phase (5 mM ammonium formate aqueous solution) was sent at a flow rate of 0.4 mL/min. The temperature condition was 40°C. An MS/MS detector (LCMS-8030 plus, Shimadzu Corporation) was used for detection. Ionization in the detector was performed in positive mode, and multi-resolution monitoring (MRM) was used for detection. For the sample, Sample I: an aqueous solution of adenosine triphosphate (ATP, 500 µg/L), adenosine diphosphate (ADP, 500 µg/L), and adenosine monophosphate (AMP, 500 µg/L) was used. The sample injection volume was 2 µL.

The chromatogram collected from the column of the example is shown in Figure 4(A), and the chromatograms collected from the columns of the comparative examples are shown in Figure 4(B) and Figure 4(C). In Figure 4(A), although ATP was insufficiently eluted, ADP and AMP were eluted as peaks although they were both tailed. In Figure 4(B), ATP and ADP were not eluted, and AMP was partially eluted in a form in which the peak shape was distorted. In Figure 4(C), ATP and ADP were not eluted, and AMP had a peak shape more distorted than in Figure 4(B), and the elution was insufficient.

ATP, ADP, and AMP are compounds having metal coordination properties because they have phosphate groups in their molecules. Because ATP has a triphosphate group, ADP has a diphosphate group, and AMP has a monophosphate group, the strength of metal coordination properties is ATP>ADP>AMP. In addition, ATP, ADP, and AMP have a base called adenine in their respective molecules. In addition, ATP, ADP, and AMP are hydrophobic because they have 10 carbon atoms in their molecules. In Figure 4(C), it is understood that ATP and ADP, which have strong metal coordination properties, were not eluted, and the elution of AMP was also insufficient due to the influence of the metal exposed in the liquid-contact portion by mobile phase of the stainless steel column hardware. Further, in Figure 4(B), since the liquid-contact portion by mobile phase of the stainless steel column hardware was covered with the first membrane of SiO 2 made from perhydropolysilazane as a raw material, it can be understood that AMP was eluted with a larger area value as compared with that in Figure 4(C). However, since the silanol groups on the surface of the first membrane of SiO₂ produced using perhydropolysilazane as a raw material and the metal dissolved in the mobile phase interacted with each other, which causes metal coordination adsorption of solutes in the sample, it can be understood that ATP and ADP were not eluted, and the peak shape of AMP was greatly distorted. In Figure 4(A), since the liquid-contact portion by mobile phase of the stainless steel column hardware was coated with the first membrane of SiO₂ made from perhydropolysilazane as a raw material, and the surface of the first membrane was methylsilylated and the silanol groups were reduced, it can be understood that ADP and AMP were both tailed but were eluted as peaks.

### EXAMPLE 2

A first membrane was produced from methyltriethoxysilane (MTES) on the liquid-contact portion by mobile phase of stainless steel column hardware of a general purpose UHPLC column, followed by the production of a second membrane, that is, methylsilylation of the surface of the first membrane.

More specifically, column hardware in which a first membrane was produced by chemical vapor deposition using MTES as a raw material on the liquid-contact portion by mobile phase of stainless steel column hardware was produced for one column. Column hardware made of stainless steel (1 column tube of 2.1 mm in inner diameter and 5 cm in length, 2 frits, and 2 end unions) was placed in a vacuum chamber, the door of the vacuum chamber was closed, and the vacuum chamber was heated and stabilized at 300°C. The degree of vacuum of the vacuum chamber was stabilized at -0.099 MPa. Subsequently, a gas of MTES diluted to 0.05% with nitrogen was introduced into the vacuum chamber at 200 sccm, oxygen was introduced into an ozone generator at 2000 sccm, and a gas having a ratio of oxygen to ozone of 98:2 was introduced into the vacuum chamber. The reaction was performed for 90 minutes.

Subsequently, the production of a second membrane by chemical vapor deposition, that is, methylsilylation of the surface portion of the first membrane, was performed on the column hardware after the production of the first membrane using MTES as a raw material on the liquid-contact portion by mobile phase of the column hardware made of stainless steel. After the production of the first membrane, a gas obtained by diluting dimethyldiethoxysilane (DMDES) to 0.05% with nitrogen was introduced into the vacuum chamber at 200 sccm, and the introduction of the mixed gas of oxygen and ozone was stopped. The reaction was performed at 300°C and a degree of vacuum of -0.099 MPa for 2 hours.

One type of column with an inner diameter of 2.1 mm and a length of 5 cm was produced by filling, with octadecylsilylated silica gel (InertSustainSwift C18, 1.9 µm, GL Sciences Inc.), the column hardware after the production of the first membrane and the methylsilylation of the surface of the first membrane (production of the second membrane).

Using the produced column, under the following conditions, the analysis of compounds having metal coordination properties and having a base was performed to confirm the peak shape (Figure 5). Using a UHPLC device Nexera (Shimadzu Corporation), a mobile phase (5 mM ammonium formate aqueous solution) was sent at a flow rate of 0.4 mL/min. The temperature condition was 40°C. An MS/MS detector (LCMS-8030 plus, Shimadzu Corporation) was used for detection. Ionization in the detector was performed in positive mode, and multi-resolution monitoring (MRM) was used for detection. For the sample, Sample I: an aqueous solution of adenosine triphosphate (ATP, 500 µg/L), adenosine diphosphate (ADP, 500 µg/L), and adenosine monophosphate (AMP, 500 µg/L) was used. The sample injection volume was 2 µL.

The chromatogram collected from the example column is shown in Figure 5. In Figure 5, although all of ATP, ADP, and AMP had tailing, they eluted as peaks. In Figure 5, since the liquid-contact portion by mobile phase of the stainless steel column hardware was coated with a first membrane made from MTES as a raw material, and the surface of the first membrane was methylsilylated and the number of silanol groups was reduced, it can be understood that ATP, ADP, and AMP were eluted as peaks although all of ATP, ADP, and AMP were tailed.

### EXAMPLE 3

A first membrane was produced from dimethyldiethoxysilane (DMDES) on the liquid-contact portion by mobile phase of stainless steel column hardware of a general purpose UHPLC column, followed by the production of a second membrane, that is, methylsilylation of the surface of the first membrane.

More specifically, column hardware in which a first membrane was produced by chemical vapor deposition using DMDES as a raw material on the liquid-contact portion by mobile phase of stainless steel column hardware was produced for one column. Column hardware made of stainless steel (1 column tube of 2.1 mm in inner diameter and 5 cm in length, 2 frits, and 2 end unions) was placed in a vacuum chamber, the door of the vacuum chamber was closed, and the vacuum chamber was heated and stabilized at 300°C. The degree of vacuum of the vacuum chamber was stabilized at -0.099 MPa. Subsequently, a gas of DMDES diluted to 0.05% with nitrogen was introduced into the vacuum chamber at 200 sccm, oxygen was introduced into an ozone generator at 2000 sccm, and a gas having a ratio of oxygen to ozone of 98:2 was introduced into the vacuum chamber. The reaction was performed for 90 minutes.

Next, the production of the second membrane by chemical vapor deposition, that is, the methylsilylation of the surface of the first membrane, was performed on the column hardware after the production of the first membrane using DMDES as a raw material on the liquid-contact portion by mobile phase of the column hardware made of stainless steel. After the production of the above first membrane, a gas obtained by diluting DMDES to 0.05% with nitrogen was introduced into the vacuum chamber at 200 sccm, and the introduction of the mixed gas of oxygen and ozone was stopped. The reaction was performed at 300°C and a degree of vacuum of -0.099 MPa for 2 hours.

The column hardware after the production of the first membrane and the methylsilylation of the surface of the first membrane (production of the second membrane) was filled with octadecylsilylated silica gel (InertSustainSwift C18, 1.9 µm, GL Sciences Inc.) to produce a column with an inner diameter of 2.1 mm and a length of 5 cm. Using the produced column, under the following conditions, analysis of compounds having metal coordination properties and having a base was performed to confirm the peak shape (Figure 6(A)).

As a comparative example, column hardware whose liquid-contact portion by mobile phase was made of polyether ether ketone (PEEK) (IDEX Health & Science LLC) was filled with octadecylsilylated silica gel (InertSustainSwift C18, 1.9 µm, GL Sciences Inc.) to produce a column having an inner diameter of 2.1 mm and a length of 5 cm. Using the produced column, the analysis of compounds having metal coordination properties and having a base was carried out under the following conditions (Figure 6(B)).

Using a UHPLC device Nexera (Shimadzu Corporation), a mobile phase (5 mM ammonium formate aqueous solution) was sent at a flow rate of 0.4 mL/min. The temperature condition was 40°C. An MS/MS detector (LCMS-8030 plus, Shimadzu Corporation) was used for detection. Ionization of the detector was performed in positive mode, and multi-resolution monitoring (MRM) was used for detection. As a sample, Sample I: an aqueous solution of adenosine triphosphate (ATP, 500 µg/L), adenosine diphosphate (ADP, 500 µg/L), and adenosine monophosphate (AMP, 500 µg/L) was used. The sample injection volume was 2 µL.

The chromatogram collected from the column of the example is shown in Figure 6(A), and the chromatogram collected from the column of the comparative example is shown in Figure 6(B). In Figure 6(A), all of ATP, ADP, and AMP were eluted as peaks having good symmetry, and the peak heights of ADP and AMP were higher than those in Figure 6(B) of the comparative example, and the area values of ADP and AMP were higher than those in Figure 6(B) of the comparative example. In Figure 6(B), although all of ATP, ADP, and AMP were eluted as peaks having good symmetry, the peak heights of ADP and AMP were lower than those in Figure 6(A), and the area values of ADP and AMP were smaller than those in Figure 6(A).

In Figure 6(A), since the liquid-contact portion by mobile phase of the stainless steel column hardware was coated with a first membrane made from DMDES as a raw material, and the surface of the first membrane was methylsilylated and silanol groups were very few, it can be understood that all of ATP, ADP, and AMP were eluted as peaks having good symmetry. In addition, since the factors in hydrophobic adsorption are also very few, it can be understood that the peak area values of ADP and AMP exceeded those on the column made of PEEK, and they were sufficiently eluted. Further, in Figure 6(B), since the column hardware whose liquid-contact portion by mobile phase was made of PEEK was used, and there was no factor in metal coordination adsorption, it is understood that all of ATP, ADP, and AMP were eluted as peaks having good symmetry. Furthermore, since PEEK is a factor in hydrophobic adsorption, it can be understood that the peak area values of ADP and AMP were smaller than those in Figure 6(A).

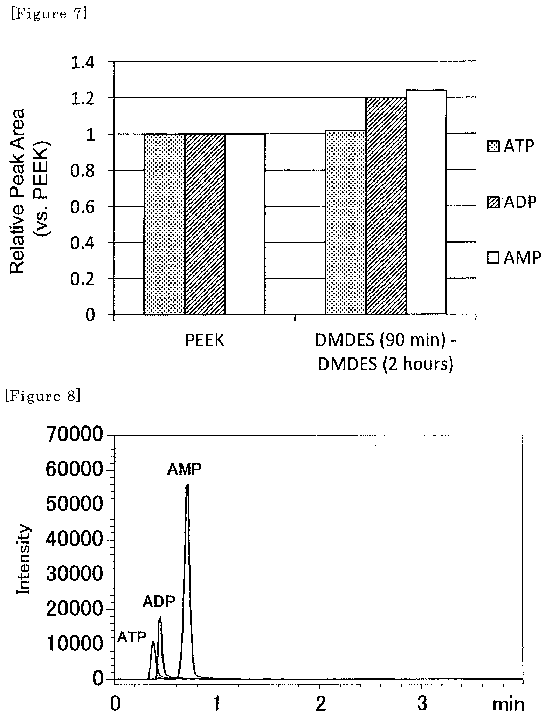

The peak area values of compounds having metal coordination properties and having a base in the column using the column hardware of the example, which were calculated from the collected chromatogram, were divided by the peak area values of the compounds having metal coordination properties and having a base in the column made of PEEK of the comparative example to calculate the values relative to the peak area values of the compounds having metal coordination properties and having a base in the column made of PEEK of the comparative example. Figure 7 is a graph showing the relative peak area values. The peak area values for the PEEK column were set to a relative value of 1.00.

In Figure 7, when the time for performing methylsilylation of the surface of the first membrane of the stainless steel column hardware was 2 hours, it was confirmed that the peak area values in the above mentioned produced column hardware were more than the peak area values in the column made of PEEK.

When the liquid-contact portion by mobile phase of the stainless steel column hardware is coated with a first membrane made from DMDES as a raw material and the time for methylsilylation of the surface of the first membrane exceeds 2 hours, the silanol groups are further reduced, and the factors in hydrophobic adsorption are also very few compared with the column made of PEEK; therefore, it can be understood that the peak area values of all of ATP, ADP, and AMP exceeded the peak area values on the column made of PEEK, and they were sufficiently eluted.

### EXAMPLE 4

A first membrane was produced on the liquid-contact portion by mobile phase of stainless steel column hardware of a general purpose UHPLC column. The production of the first membrane was carried out by producing a first layer using perhydropolysilazane as a raw material, followed by producing a second layer using dimethyldiethoxysilane (DMDES) as a raw material on the surface of the first layer produced using perhydropolysilazane as a raw material, that is, by stacking them in a bilayer. Subsequently, the production of the second membrane, that is, methylsilylation of the surface of the first membrane, more particularly methylsilylation of the surface of the second layer using DMDES as a raw material, was performed.

Specifically, a first layer was produced from perhydropolysilazane as a raw material on the liquid-contact portion by mobile phase of stainless steel column hardware, followed by producing a second layer from DMDES as a raw material to produce a first membrane, and followed by production of a second membrane, that is, methylsilylation of the surface of the first membrane, in particular, methylsilylation of the surface of the second layer made from DMDES as a raw material, to produce column hardware for one column.

First, in the production of the first membrane, as the production of the first layer of the first membrane, an isopropyl alcohol solution of perhydropolysilazane (1.0%, w/v) was produced in a 1000 mL tall beaker, and stainless steel column hardware (1 column tube having an inner diameter of 2.1 mm and a length of 5 cm, 2 frits, and 2 end unions) was submerged. Ultrasonic treatment was performed for 3 minutes, and the column hardware was removed and dried at room temperature for 12 hours on a laboratory table laid with an industrial paper wiper. The dried column hardware was transferred into an oven stabilized at 250°C, and heat treatment was performed at 250°C for 3 hours.

Further, as the production of the second layer of the first membrane, a membrane was produced using DMDES as a raw material (second layer of the first membrane) by chemical vapor deposition on the column hardware in which the production of a membrane using perhydropolysilazane as a raw material (first layer of the first membrane) was completed on the liquid-contact portion by mobile phase of the column hardware made of stainless steel. The column hardware for one column after the production of the membrane using perhydropolysilazane as a raw material was placed into a vacuum chamber, the door of the vacuum chamber was closed, and the vacuum chamber was heated and stabilized at 300°C. The degree of vacuum of the vacuum chamber was stabilized at -0.099 MPa. Subsequently, a gas of DMDES diluted to 0.05% with nitrogen was introduced into the vacuum chamber at 200 sccm, oxygen was introduced into an ozone generator at 2000 seem, and a gas having a ratio of oxygen to ozone of 98:2 was introduced into the vacuum chamber. The reaction was performed for 90 minutes.

After the production of the first layer using perhydropolysilazane as a raw material and the second layer using DMDES as a raw material on the liquid-contact portion by mobile phase of the column hardware made of stainless steel, methylsilylation of the surface of the layer (second layer of the first membrane) produced using DMDES as a raw material was performed by chemical vapor deposition. Following the production of the above membrane using DMDES as a raw material, a gas of DMDES diluted to 0.05% with nitrogen was introduced into the vacuum chamber at 200 sccm, and the introduction of the mixed gas of oxygen and ozone was stopped. The reaction was performed at 300°C and a degree of vacuum of -0.099 MPa for 2 hours.

A column was produced by filling, with octadecylsilylated silica gel, the column hardware after the production of the first membrane and the methylsilylation of the surface of the first membrane (production of the second membrane). More specifically, the column hardware on which the first layer was produced using perhydropolysilazane as a raw material, the second layer was produced using DMDES as a raw material, and the surface of the second layer, that is, the surface of the first membrane, was methylsilylated using DMDES as a raw material was filled with octadecylsilylated silica gel (InertSustainSwift C18, 1.9 pm, GL Sciences Inc.) to produce a column having an inner diameter of 2.1 mm and a length of 5 cm.

Using the produced column, compounds having metal coordination properties and having a base were analyzed under the following conditions, and the peak shape was confirmed (Figure 8). A mobile phase (5 mM ammonium formate aqueous solution) was sent at a flow rate of 0.4 mL/min using a UHPLC device Nexera (registered trademark) (Shimadzu Corporation). The temperature condition was 40°C. An MS/MS detector (LCMS-8030 plus, Shimadzu Corporation) was used for detection. Ionization in the detector was performed in positive mode, and multi-resolution monitoring (MRM) was used for detection. As a sample, sample I: an aqueous solution of adenosine triphosphate (ATP, 500 pg/L), adenosine diphosphate (ADP, 500 µg/L), and adenosine monophosphate (AMP, 500 µg/L) was used. The sample injection volume was 2 µL.

The collected chromatogram is shown in Figure 8. In Figure 8, ATP, ADP, and AMP were eluted as peaks with good symmetry. In Figure 8, the liquid-contact portion by mobile phase of the stainless steel column hardware was coated with a layer made from perhydropolysilazane, followed by coating with a layer made from DMDES, that is, coated with a first membrane composed of two layers, and further the surface of the layer made from DMDES was methylsilylated, resulting in a very small amount of silanol groups; therefore, it can be undestood that ATP, ADP, and AMP were eluted as peaks with good symmetry.

### EXAMPLE 5

A first membrane was produced from dimethyldiethoxysilane (DMDES) on the liquid-contact portion by mobile phase of stainless steel column hardware of a general purpose HPLC column, followed by the production of a second membrane, that is, methylsilylation of the surface of the first membrane.

Specifically, column hardware in which a first membrane was produced by chemical vapor deposition using DMDES as a raw material on the liquid-contact portion by mobile phase of stainless steel column hardware was produced for one column. Column hardware made of stainless steel (1 column tube with an inner diameter of 2.1 mm and a length of 15 cm, 2 frits, and 2 end unions) was placed in a vacuum chamber, the door of the vacuum chamber was closed, and the vacuum chamber was heated and stabilized at 300°C. Moreover, the degree of vacuum of the vacuum chamber was stabilized at -0.099 MPa. Subsequently, a gas obtained by diluting DMDES to 0.05% with nitrogen was introduced into the vacuum chamber at 200 sccm, oxygen was introduced into an ozone generator at 2000 sccm, and a gas having a ratio of oxygen to ozone of 98:2 was introduced into the vacuum chamber. The reaction was performed for 90 minutes.

The production of the second membrane using chemical vapor deposition, that is, the methylsilylation of the surface of the first membrane, was performed on the column hardware after the production of the first membrane using DMDES as a raw material on the liquid-contact portion by mobile phase of the column hardware made of stainless steel. Following the production of the above first membrane, a gas in which DMDES was diluted to 0.05% with nitrogen was introduced into the vacuum chamber at 200 sccm, and the introduction of the mixed gas of oxygen and ozone was stopped. The reaction was performed at 300°C and a degree of vacuum of -0.099 MPa for 2 hours.

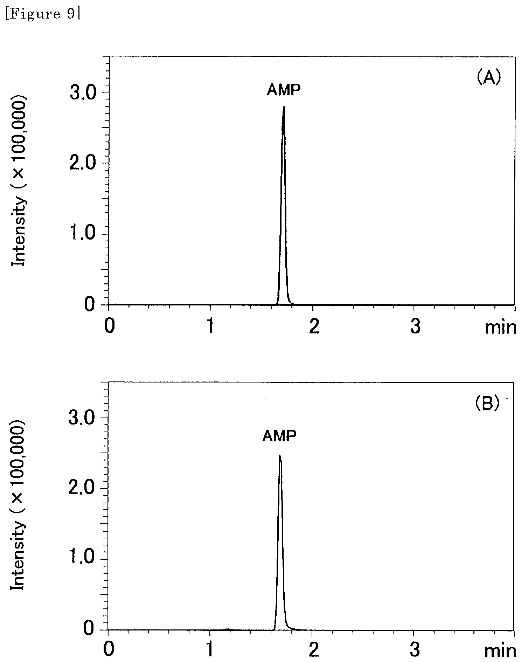

A column with an inner diameter of 2.1 mm and a length of 15 cm was produced by filling, with octadecylsilylated silica gel (InertSustainSwift C18, 3 µm, GL Sciences Inc.), the column hardware after the production of the first membrane and the methylsilylation of the surface of the first membrane (production of the second membrane). Using the produced column, under the following conditions, analysis of a compound having metal coordination properties and having a base and analysis of compounds having metal coordination properties, having strong hydrophobicity, and having a base were performed to confirm the peak shape (Figure 9(A), Figure 10(A), and Figure 11(A)).

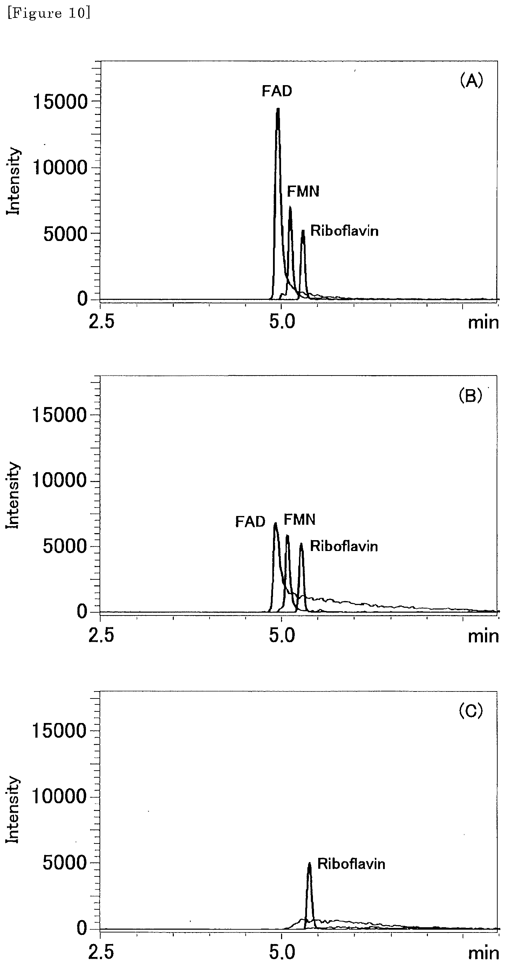

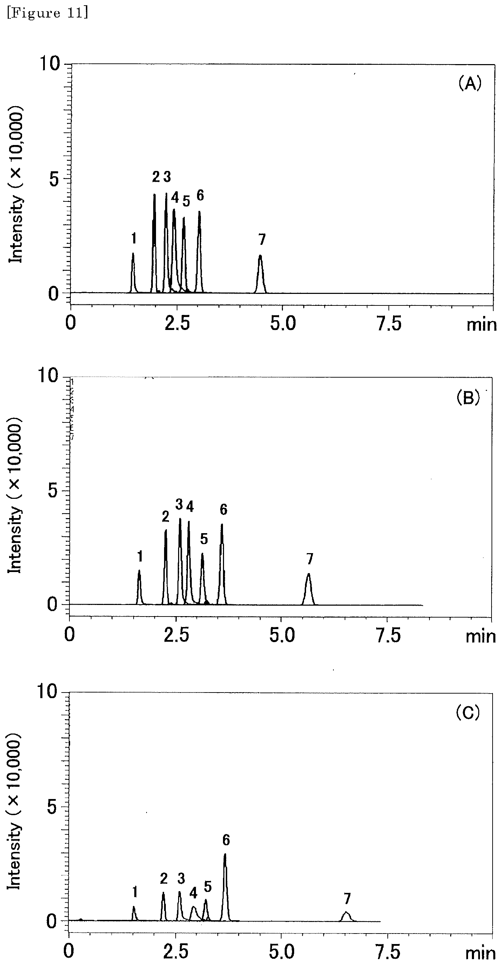

As a comparative example, column hardware having a liquid-contact portion by mobile phase whose surface is made of polyether ether ketone (PEEK) (IDEX Health & Science LLC) was filled with the same octadecylsilylated silica gel as in the example to produce a column having an inner diameter of 2.1 mm and a length of 15 cm, and under the following conditions, analysis of a compound having metal coordination properties and having a base and analysis of compounds having metal coordination properties, having strong hydrophobicity, and having a base were performed (Figure 9(B), Figure 10(B), and Figure 11(B)). In addition, as a comparative example, untreated stainless steel column hardware was filled with the same octadecylsilylated silica gel as in the example to produce a column having an inner diameter of 2.1 mm and a length of 15 cm, and under the following conditions, analysis of compounds having metal coordination properties, having strong hydrophobicity, and having a base was performed (Figure 10(C), Figure 11(C)).

In the analysis, a UHPLC device Nexera (Shimadzu Corporation) was used, and a mobile phase (5mM ammonium formate aqueous solution) was sent at a flow rate of 0.4 mL/min. The temperature condition was 40°C. An MS/MS detector (LCMS-8030 plus, Shimadzu Corporation) was used for detection. Ionization in the detector was performed in positive mode, and multi-resolution monitoring (MRM) was used for detection. Sample II: an aqueous solution of adenosine monophosphate (AMP, 500 µg/L) was used for the sample. The sample injection volume was 2 µL. No measurements were performed using the untreated column hardware.

The produced columns were also used for the analysis of compounds having metal coordination properties, having high hydrophobicity, and having a base under the following conditions. A UHPLC device Nexera (Shimadzu Corporation) was used, and a mobile phase A: 0.1% (v/v) formic acid aqueous solution, and a mobile phase B: acetonitrile at A/B = 99/1-(10 min)-0/100-(5 min)-0/100-(0.1 min)-99/1,v/v were sent at a flow rate of 0.2 mL/min. The temperature condition was 40°C. An MS/MS detector (LCMS-8030 plus, Shimadzu Corporation) was used for detection. Ionization in the detector was performed in positive mode, and multi-resolution monitoring (MRM) was used for detection. Sample III: an aqueous solution of flavin adenine dinucleotide (FAD, 1.0 mg/L), flavin mononucleotide (FMN, 0.1 mg/L), and riboflavin (1.0 mg/L) was used for the sample. The sample injection volume was 3 pL.

The analysis of phospholipids which are compounds having metal coordination properties, having high hydrophobicity, and having a base was also carried out using the produced columns under the following conditions. Using a UHPLC device Nexera (Shimadzu Corporation), a mobile phase (methanol solution of 5 mM ammonium formate) was sent at a flow rate of 0.3 mL/min. The temperature condition was 40°C. An MS/MS detector (LCMS-8030 plus, Shimadzu Corporation) was used for detection. Ionization in the detector was performed in positive mode, and multi-resolution monitoring (MRM) was used for detection. Sample IV: 1. lysophosphatidic acid (LPA, 0.5 mg/L), 2. phosphatidylinositol (PI, 0.1 mg/L), 3. phosphatidic acid (PA, 0.1 mg/L), 4. phosphatidylserine (PS, 0.1 mg/L), 5. phosphatidylethanolamine (PE, 0.1 mg/L), 6. phosphatidylcholine (PC, 0.05 mg/L), 7. cardiolipin (CL, 0.5 mg/L) in methanol was used as the sample. The sample injection volume was 1 µL.

Chromatograms collected using Sample II are shown in Figure 9(A) and 9(B). In Figure 9(A), AMP was eluted as a peak with good symmetry. Further, in Figure 9(B), AMP was eluted as a peak having good symmetry, but the peak height of AMP is lower than that in Figure 9(A), and the area value is smaller than that in Figure 9(A).

In Figure 9(A), the liquid-contact portion by mobile phase of the stainless steel column hardware was coated with a first membrane made from DMDES, and the surface of the first membrane was methylsilylated, resulting in a very small amount of silanol groups; therefore, it can be understood that AMP was eluted as a well symmetrical peak. Further, in Figure 9(B), since a column with a liquid-contact portion by mobile phase made of PEEK was used and there was no factor in metal coordination adsorption, it can be understood that AMP was eluted as a well symmetrical peak. Furthermore, since PEEK is a factor in hydrophobic adsorption, it can be understood that the peak area value of AMP was smaller than that in Figure 9(A).

Chromatograms collected using sample III are shown in Figure 10(A), Figure 10(B), and Figure 10(C). In Figure 10(A), FAD was tailed, but eluted at a peak height of 14500, and FMN and riboflavin, as well symmetrical peaks, were eluted at peak heights of 6500 and 5000, respectively. In Figure 10(B), riboflavin was eluted as a peak similar to that in Figure 10(A), but FAD was more strongly tailed than that in Figure 10(A) and was eluted at a peak height of 6500, and FMN was eluted at a peak height of 5500 as a peak wider than that in Figure 10(A). In Figure 10(C), riboflavin was eluted as a peak similar to that in Figure 10(A), but FAD and FMN were insufficiently eluted.

Since FAD has riboflavin, adenine, and diphosphate in its molecule, FAD is a compound having a base, having metal coordination properties, and having strong hydrophobicity. Since FMN has riboflavin and monophosphate in its molecule, FMN is a compound having metal coordination properties, and its hydrophobicity is not as high as that of FAD. Since riboflavin does not have phosphate in its molecule, riboflavin is not a compound having metal coordination properties, and its hydrophobicity is similar to that of FMN.

In Figure 10(A), the liquid-contact portion by mobile phase of the stainless steel column hardware was coated with a first membrane made from DMDES as a raw material, and the surface of the first membrane was methylsilylated and the number of silanol groups was reduced, and in addition, there were few factors in adsorption of highly hydrophobic compounds; therefore, it can be understood that FAD was tailed, but it was eluted at a peak height of 14500, and FMN was eluted as a peak with good symmetry. In Figure 10(B), PEEK, which forms the liquid-contact portion by mobile phase of the column hardware, is not a factor in adsorbing a compound having metal coordination properties, but is a factor in adsorbing a compound having high hydrophobicity. Therefore, it can be understood that FMN was eluted as a peak with good symmetry, and FAD was tailed more strongly than that in Figure 10(A). In addition, in Figure 10(C), since metal is exposed in the liquid-contact portion area contactable by mobile phase of the untreated column hardware, it can be understood that FAD and FMN were insufficiently eluted. Since riboflavin is not a metal coordination compound and is not highly hydrophobic, it can be understood that it was eluted as a similar peak in any of Figure 10(A), 10(B), and 10(C).

Chromatograms collected using sample IV are shown in Figure 11(A), Figure 11(B), and Figure 11(C). In Figure 11(A), PS in sample IV was slightly tailed, but all other solutes were eluted as well symmetrical peaks. Further, in Figure 11(B), the overall retention time was delayed compared to that in Figure 11(A), and the solutes other than PC were eluted with smaller peak area values compared to those in Figure 11(A), but all solutes in sample IV were eluted as peaks of good symmetry. In addition, in Figure 11(C), all of the solutes were insufficiently eluted.

Phospholipids have phosphate in their molecules and have a structure in which a fatty acid forms an ester bond; therefore, they are compounds having metal coordination properties and having high hydrophobicity. In addition, PE is a compound having a base called ethanolamine in the molecule, and PC is a compound having a base called choline in the molecule.

In Figure 11(A), the liquid-contact portion by mobile phase of the stainless steel column hardware was coated with the first membrane made from DMDES, and the surface of the first membrane was methylsilylated to reduce the amount of silanol groups, and in addition, there were less factors in adsorbing highly hydrophobic compounds; therefore, it can be understood that PS was slightly tailed, but all other solutes were eluted as well symmetrical peaks. Further, in Figure 11(B), since PEEK, which forms the liquid-contact portion by mobile phase of the column hardware, is not a factor in adsorbing compounds having metal coordination properties, but is a factor in adsorbing compounds having high hydrophobicity, it can be understood that the overall retention time was delayed as compared with Figure 11(A), and the solutes other than PC were eluted with small area values compared with Figure 11(A). Further, in Figure 11(C), since metal was exposed in the liquid-contact portion by mobile phase of the untreated column hardware, it can be understood that all the solutes were insufficiently eluted.

### EXAMPLE 6

A first membrane was produced from dimethyldiethoxysilane (DMDES) on the liquid-contact portion by mobile phase of stainless steel column hardware of a general purpose HPLC column, followed by the production of a second membrane, that is, methylsilylation of the surface of the first membrane. Column hardware was produced by performing methylsilylation for 1 hour.

Specifically, column hardware in which a first membrane was produced by chemical vapor deposition using DMDES as a raw material on the liquid-contact portion by mobile phase of stainless steel column hardware was produced for one column. Column hardware made of stainless steel (1 column tube of 2.1 mm in inner diameter and 5 cm in length, 2 frits, and 2 end unions) was placed in a vacuum chamber, the door of the vacuum chamber was closed, and the vacuum chamber was heated and stabilized at 300°C. The degree of vacuum of the vacuum chamber was stabilized at -0.099 MPa. Subsequently, a gas of DMDES diluted to 0.05% with nitrogen was introduced into the vacuum chamber at 200 seem, oxygen was introduced into an ozone generator at 2000 sccm, and a gas having a ratio of oxygen to ozone of 98:2 was introduced into the vacuum chamber. The reaction was performed for 90 minutes.

Next, the production of the second membrane by chemical vapor deposition, that is, the methylsilylation of the surface of the first membrane, was performed for 1 hour on the column hardware after the production of the first membrane using DMDES as a raw material on the liquid-contact portion by mobile phase of the column hardware made of stainless steel. After the production of the above first membrane, a gas obtained by diluting DMDES to 0.05% with nitrogen was introduced into the vacuum chamber at 200 sccm, and the introduction of the mixed gas of oxygen and ozone was stopped. The reaction was performed at 300°C and at a degree of vacuum of -0.099 MPa for 1 hour.

The column hardware obtained by producing the first membrane and methylsilylating the surface of the first membrane (producing the second membrane) for 1 hour was filled with octadecylsilylated silica gel (InertSustainSwift C18, 1.9 pm, GL Sciences Inc.) to produce a column with an inner diameter of 2.1 mm and a length of 5 cm.

Using the produced column, the analysis of compounds having metal coordination properties and having a base was carried out under the following conditions. Using a UHPLC device Nexera (Shimadzu Corporation), a mobile phase (aqueous solution of 5 mM ammonium formate) was sent at a flow rate of 0.4 mL/min. The temperature condition was 40°C. An MS/MS detector (LCMS-8030 plus, Shimadzu Corporation) was used for detection. Ionization in the detector was performed in positive mode, and multi-resolution monitoring (MRM) was used for detection. For the sample, Sample I: an aqueous solution of adenosine triphosphate (ATP, 500 µg/L), adenosine diphosphate (ADP, 500 pg/L), and adenosine monophosphate (AMP, 500 µg/L) was used. The sample injection volume was 2 µL.

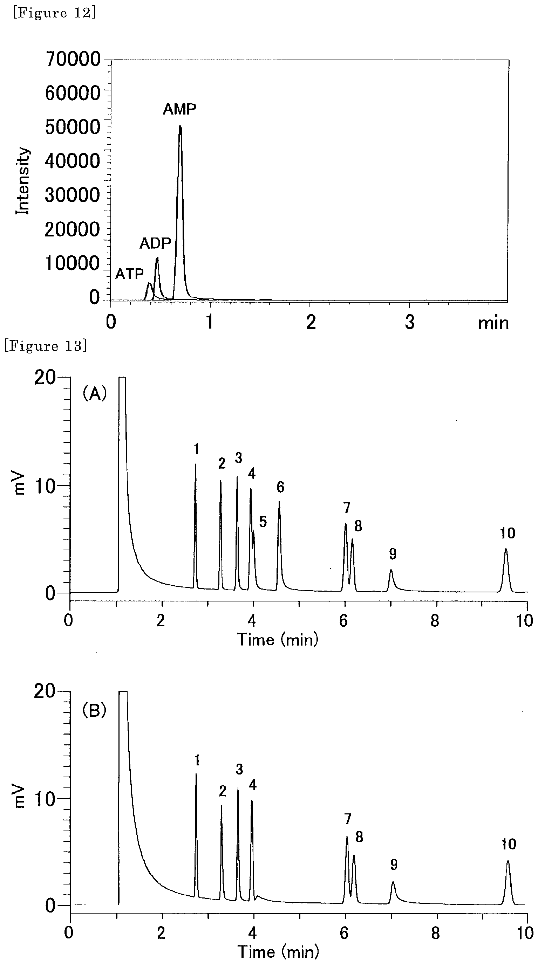

A chromatogram collected from the column of the example is shown in Figure 12. In Figure 12, tailing was observed with ATP, but both ADP and AMP were eluted as peaks with good symmetry. In Figure 12, since the liquid-contact portion by mobile phase of the stainless-steel column hardware was coated with the first membrane made from DMDES as a raw material, and the surface of the first membrane was methylsilylated and the number of silanol groups was reduced, it can be understood that tailing was observed with ATP, but both ADP and AMP were eluted as peaks with good symmetry.

### EXAMPLE 7

In order to confirm the reduction of non-specific adsorption of a compound having metal coordination properties and a basic compound by the column hardware for liquid chromatography of the present invention, the column hardware was connected to a gas chromatograph, and analysis of a compound having metal coordination properties and a basic compound was performed to confirm the peak shape.

A first membrane was produced from dimethyldiethoxysilane (DMDES) on the liquid-contact portion by mobile phase of stainless steel column hardware, followed by the production of a second membrane, that is, methylsilylation of the surface of the first membrane. As a comparative example, only a first membrane was produced using DMDES as a raw material on the liquid-contact portion by mobile phase of stainless steel column hardware.

Specifically, column hardware was produced in which a first membrane was produced by chemical vapor deposition using DMDES as a raw material on the liquid-contact portion by mobile phase of stainless steel column hardware. Column hardware made of stainless steel (1 column tube of 2.1 mm in inner diameter and 5 cm in length, 2 frits, and 2 end unions) was placed in a vacuum chamber, the door of the vacuum chamber was closed, and the vacuum chamber was heated and stabilized at 300°C. The degree of vacuum of the vacuum chamber was stabilized at -0.099 MPa. Subsequently, a gas of DMDES diluted to 0.05% with nitrogen was introduced into the vacuum chamber at 200 sccm, oxygen was introduced into an ozone generator at 2000 sccm, and a gas having a ratio of oxygen to ozone of 98:2 was introduced into the vacuum chamber. The reaction was performed for 90 minutes.

Subsequently, methylsilylation of the surface of the first membrane (production of the second membrane) using chemical vapor deposition was performed on the surface of the column hardware after the production of the first membrane using DMDES as a raw material on the liquid-contact portion by mobile phase of the column hardware made of stainless steel. Following the production of the above first membrane, a gas in which DMDES was diluted to 0.05% with nitrogen was introduced into the vacuum chamber at 200 sccm, and the introduction of the mixed gas of oxygen and ozone was stopped. The reaction was performed at 300°C and a degree of vacuum of -0.099 MPa for 2 hours.

As a comparative example, column hardware in which a first membrane was produced using DMDES as a raw material on the liquid-contact portion by mobile phase of stainless steel column hardware was produced as follows. Column hardware made of stainless steel (1 column tube of 2.1 mm in inner diameter and 5 cm in length, 2 frits, and 2 end unions) was placed in a vacuum chamber, the door of the vacuum chamber was closed, and the vacuum chamber was heated and stabilized at 300°C. The degree of vacuum of the vacuum chamber was stabilized at -0.099 MPa. Subsequently, a gas of DMDES diluted to 0.05% with nitrogen was introduced into the vacuum chamber at 200 sccm, oxygen was introduced into an ozone generator at 2000 sccm, and a gas having a ratio of oxygen to ozone of 98:2 was introduced into the vacuum chamber. The reaction was performed for 90 minutes.

The column hardware of the example in which the production of the first membrane and the methylsilylation of the surface of the first membrane (production of the second membrane) were completed and the column hardware of the comparative example in which only the first membrane was produced were each connected at both ends to two low polarity capillary columns (InertCap 1, outer diameter: 0.68 mm, inner diameter: 0.53 mm, length: 10 cm, stationary phase membrane thickness: 1 µm, GL Sciences Inc., and InertCap 1, outer diameter: 0.68 mm, inner diameter: 0.53 mm, length: 30 m, stationary phase membrane thickness: 1 µm, GL Sciences Inc.) in which 100% dimethylpolysiloxane was chemically bonded to the inner wall of the capillary tube as a stationary phase. Using a removable fused silica adapter for an outer diameter of 1/16 inch (FS1R.8-5 (nut, ferrule, liner), Valco Instruments Co. Inc.), the nut was tightened with a capillary column passed inside the liner inside the ferrule, and the column hardware and the capillary columns were connected.

An injection port was connected to InertCap 1 (outer diameter: 0.68 mm, inner diameter: 0.53 mm, length: 10 cm, stationary phase membrane thickness: 1 pm)-column hardware-InertCap 1 (outer diameter: 0.68 mm, inner diameter: 0.53 mm, length: 30 m, stationary phase membrane thickness: 1 µm) in this order, and the outlet of the InertCap 1 (outer diameter: 0.68 mm, inner diameter: 0.53 mm, length: 30 m, stationary phase membrane thickness: 1 µm) was connected to the inlet of a flame ionization detector (FID).

The column hardware of the example and comparative example was connected to columns for gas chromatography, and analysis of a compound having metal coordination properties and a basic compound was performed to confirm the peak shape (Figure 13(A), Figure 13(B)) under the following conditions.

A gas chromatograph GC-4000 (GL Sciences Inc.) was used, and a mobile phase (helium) was insufflated at a pressure of 80 kPa. The temperature condition was 130°C. An FID (a part of GC-4000, GL Sciences Inc.) was used for detection. The temperature of the FID was 250°C. For the sample, Sample V: a solution diluted 100 times with dichloromethane of an isopropyl alcohol solution (capillary column test sample D, containing 0.1% to 0.5% of each of 1. n-undecane, 2. n-nonanol, 3. naphthalene, 4. n-dodecane, 5. 1,7-heptanediol, 6. n-decylamine, 7. n-tridecane, 8. methyl-n-decanoate, 9. 2,4,5-trichlorophenol, and 10. n-tetradecane, GL Sciences Inc.) was used. The sample injection volume was 0.4 µL, the temperature of the injection port was 250°C, and the split ratio of the injection port was 1/30.

The chromatogram collected from the column of the example is shown in Figure 13(A), and the chromatogram collected from the column of the comparative example is shown in Figure 13(B). In Figure 13(A), n-decylamine, which is a basic compound, was eluted with slight tailing, and all other solutes were eluted as well shaped peaks. In Figure 13(B), solutes other than 1,7-heptanediol, which is a compound having metal coordination properties, and n-decylamine, which is a basic compound, were eluted as well shaped peaks, but 1,7-heptanediol, which is a compound having metal coordination properties, and n-decylamine, which is a basic compound, were not eluted.

In Figure 13(A), since the liquid-contact portion by mobile phase of the stainless steel column hardware was coated with the first membrane produced using DMDES as a raw material, and further, the surface of the first membrane was methylsilylated and the silanol groups were reduced, it can be understood that although n-decylamine in the sample V was eluted with slight tailing, all other solutes were eluted as well shaped peaks. In Figure 13(B), since the liquid-contact portion by mobile phase of the stainless steel column hardware was coated with only the first membrane produced using DMDES as a raw material, it can be understood that 1,7-heptanediol, which is a compound having metal coordination properties, was not eluted due to the effect of the silanol groups on the surface of the first membrane. In addition, it can be understood that n-decylamine, which is a basic compound, was adsorbed on the silanol groups on the surface of the first membrane and was not eluted.

### EXAMPLE 8

The following experiment was conducted to confirm whether column hardware having the function as the column hardware for liquid chromatography of the present invention can be produced even when the column hardware has a large length and a small inner diameter.

A first membrane was produced using dimethyldiethoxysilane (DMDES) as a raw material over 4 hours on the liquid-contact portion by mobile phase of a stainless steel column tube, followed by the production of a second membrane, that is, methylsilylation of the surface of the first membrane, for 2 hours. In addition, a first membrane was produced using DMDES as a raw material over 90 minutes on the liquid-contact portion by mobile phase of a stainless steel column tube, followed by the production of a second membrane, that is, methylsilylation of the surface of the first membrane, for 2 hours.

Specifically, a column tube in which a first membrane was produced using DMDES as a raw material on the liquid-contact portion by mobile phase of a stainless steel column tube using chemical vapor deposition was produced. A stainless steel column tube (outer diameter: 1/16 inch, inner diameter: 1.0 mm, length: 10 m, GL Sciences Inc.) was placed in a vacuum chamber, the door of the vacuum chamber was closed, and the vacuum chamber was heated and stabilized at 300°C. The degree of vacuum of the vacuum chamber was stabilized at -0.099 MPa. Subsequently, a gas of DMDES diluted to 0.05% with nitrogen was introduced into the vacuum chamber at 200 seem, oxygen was introduced into an ozone generator at 2000 seem, and a gas having a ratio of oxygen to ozone of 98:2 was introduced into the vacuum chamber. The reaction was performed for 4 hours.

Next, the production of the second membrane using chemical vapor deposition, that is, methylsilylation of the surface of the first membrane, was performed for 2 hours on the column tube after the production of the first membrane using DMDES as a raw material on the liquid-contact portion by mobile phase of the stainless steel column tube. Following the production of the above first membrane, a gas in which DMDES was diluted to 0.05% with nitrogen was introduced into the vacuum chamber at 200 sccm, and the introduction of the mixed gas of oxygen and ozone was stopped. The reaction was performed at 300°C and at a degree of vacuum of -0.099 MPa for 2 hours.

Separately, a column tube was produced in which a first membrane was produced by chemical vapor deposition using DMDES as a raw material on the liquid-contact portion by mobile phase of a stainless steel column tube. A stainless steel column tube (1/16 inches in outer diameter, 1.0 mm in inner diameter, 10 m in length, GL Sciences Inc.) was placed in a vacuum chamber, the door of the vacuum chamber was closed, and the vacuum chamber was heated and stabilized at 300°C. The degree of vacuum of the vacuum chamber was stabilized at -0.099 MPa. Subsequently, a gas of DMDES diluted to 0.05% with nitrogen was introduced into the vacuum chamber at 200 sccm, oxygen was introduced into an ozone generator at 2000 sccm, and a gas having a ratio of oxygen to ozone of 98:2 was introduced into the vacuum chamber. The reaction was performed for 90 minutes.

Next, the production of the second membrane using chemical vapor deposition, that is, methylsilylation of the surface of the first membrane, was performed for 2 hours on the column tube after the production of the first membrane using DMDES as a raw material on the liquid-contact portion by mobile phase of the stainless steel column tube. Following the production of the above first membrane, a gas in which DMDES was diluted to 0.05% with nitrogen was introduced into the vacuum chamber at 200 sccm, and the introduction of the mixed gas of oxygen and ozone was stopped. The reaction was performed at 300°C and at a degree of vacuum of -0.099 MPa for 2 hours.

The column tube subjected to the production of the first membrane over 4 hours and the methylsilylation of the surface of the first membrane (production of the second membrane) over 2 hours and the column tube subjected to the production of the first membrane over 90 minutes and the methylsilylation of the surface of the first membrane (production of the second membrane) over 2 hours were each connected at both ends to two low polarity capillary columns in which 5% diphenyl-95% dimethylpolysiloxane was chemically bonded to the inner wall of the capillary tubes as the stationary phase (InertCap 5, outer diameter: 0.68 mm, inner diameter: 0.53 mm, length: 10 cm, stationary phase membrane thickness: 5 µm, GL Sciences Inc. and InertCap 5, outer diameter: 0.68 mm, inner diameter: 0.53 mm, length: 30 m, stationary phase membrane thickness: 5 µm, GL Sciences Inc.). Using a removable fused silica adapter for an outer diameter of 1/16 inch (FS1R.8-5 (nut, ferrule, liner), Valco Instruments Co. Inc.), the nut was tightened with a capillary column passed inside the liner inside the ferrule, and the capillary column was connected to one end of a 1/16 inch stainless steel union (U-322, Valco Instruments Co. Inc.). The other end of the 1/16 inch stainless steel union was connected to the column tube on which the first and second membranes were produced, using LZN1-10 (long nut 19 mm, Valco Instruments Co. Inc.) and ZF1S6-10 (ferrule, Valco Instruments Co. Inc.). A 1/16 stainless steel union was used in which DMDES was reacted as a raw material for 90 minutes to produce a first membrane on the liquid-contact portion by mobile phase, and subsequently DMDES was reacted as a raw material for 2 hours to perform methylsilylation of the surface of the first membrane (production of a second membrane) in the same manner as described in Example 7.

An injection port was connected to InertCap 5 (outer diameter: 0.68 mm, inner diameter: 0.53 mm, length: 10 cm, stationary phase membrane thickness: 5 µm)-union-the column tube in which the first membrane and the second membrane were produced-union-InertCap 5 (outer diameter: 0.68 mm, inner diameter: 0.53 mm, length: 30 m, stationary phase membrane thickness: 5 µm) in this order. The outlet of InertCap 5 (outer diameter: 0.68 mm, inner diameter: 0.53 mm, length: 30 m, stationary phase membrane thickness: 5 µm) was connected to the inlet of a flame ionization detector (FID).

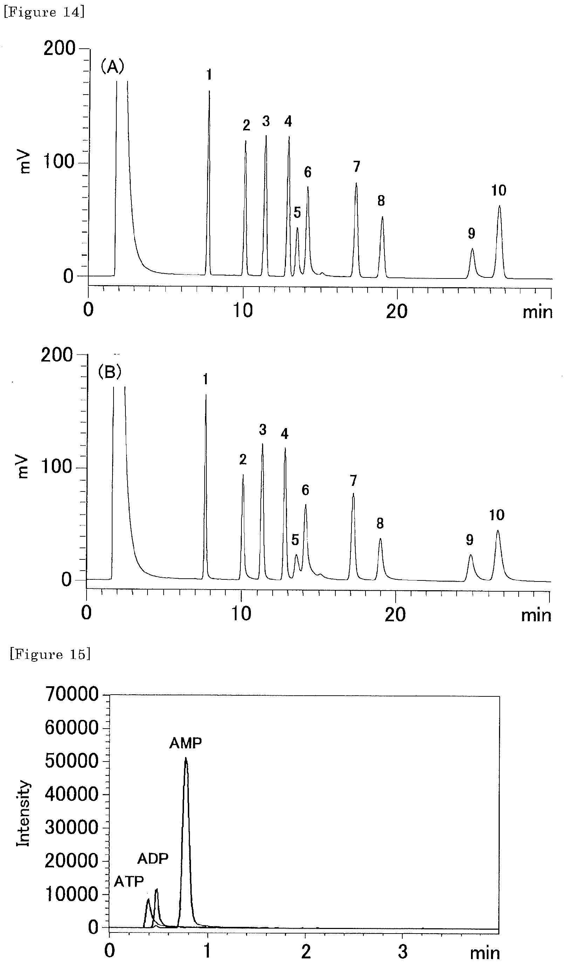

Both ends of the column tube in which the first membrane was produced over 4 hours and methylsilylation was performed for 2 hours were connected to columns for gas chromatography, and analysis of a compound having metal coordination properties and a basic compound was performed to confirm the peak shape (Figure 14(A)) under the following conditions. In addition, both ends of the column tube in which the first membrane was produced over 90 minutes and methylsilylation was performed for 2 hours were connected to columns for gas chromatography, and analysis of a compound having metal coordination properties and a basic compound was performed to confirm the peak shape (Figure 14(B)).

A gas chromatograph GC-4000 (GL Sciences Inc.) was used, and a mobile phase (helium) was insufflated at a pressure of 30 kPa. The temperature condition was 150°C. An FID (a part of GC-4000, GL Sciences Inc.) was used for detection. The temperature of the FID was 260°C. For the sample, Sample V: an isopropyl alcohol solution (capillary column test sample D, containing 0.1% to 0.5% of each of 1. n-undecane, 2. n-nonanol, 3. naphthalene, 4. n-dodecane, 5. 1,7-heptanediol, 6. n-decylamine, 7. n-tridecane, 8. methyl-n-decanoate, 9. 2,4,5-trichlorophenol, and 10. n-tetradecane, GL Sciences Inc.) was used. The sample injection volume was 0.2 pL, the temperature of the injection port was 250°C, and the split ratio of the injection port was 1/30.

The collected chromatograms are shown in Figure 14(A) and Figure 14(B). In Figure 14(A), in which a column tube subjected to the production of the first membrane for 4 hours and the methylsilylation of the surface of the first membrane (production of the second membrane) for 2 hours was used, all solutes in sample V were eluted as well-shaped peaks. In addition, in Figure 14(B), in which a column tube subjected to the production of the first membrane for 90 minutes and the methylsilylation of the surface of the first membrane (production of the second membrane) for 2 hours was used, in particular, 1,7-heptanediol, which is a compound having metal coordination properties, was partially not eluted.

In Figure 14(A), since the liquid-contact portion by mobile phase of a stainless steel column tube having an outer diameter of 1/16 inch, an inner diameter of 1.0 mm, and a length of 10 m was coated with a first membrane produced using DMDES as a raw material over 4 hours, and further, the surface of the first membrane was methylsilylated for 2 hours and the silanol groups were reduced, it can be understood that all the solutes in the sample V were eluted as well shaped peaks. In Figure 14(B), the liquid-contact portion by mobile phase of the stainless steel column tube was covered with a first membrane produced using DMDES as a raw material for 90 minutes, and further the surface of the first membrane was methylsilylated for 2 hours. However, since compared with Figure 14(A), the production of the first membrane of SiO₂ was not enough, and the metal exposed on the surface of the stainless steel column tube was not completely covered, it can be understood that 1,7-heptanediol, which is a compound having metal coordination properties, was partially not eluted.

From this, it can be understood that the effect of the present invention can be achieved by increasing the production time (reaction time) of the first membrane even in the case of a long column tube having a length of 10 m and further having an inner diameter of 1.0 mm, and it can be understood that the column hardware of the present invention can be configured in the case of a column tube having a length of 10 m or less and an inner diameter of 1.0 mm or more.

### EXAMPLE 9

A first membrane was produced from dimethyldiethoxysilane (DMDES) on the liquid-contact portion by mobile phase of stainless steel column hardware of a general purpose UHPLC column, followed by the production of a second membrane, that is, methylsilylation of the surface of the first membrane, using trimethylethoxysilane (TMES) as a raw material.

Specifically, column hardware in which a first membrane was produced by chemical vapor deposition using DMDES as a raw material on the liquid-contact portion by mobile phase of stainless steel column hardware was prepared for one column. Column hardware made of stainless steel (1 column tube of 2.1 mm in inner diameter and 5 cm in length, 2 frits, and 2 end unions) was placed in a vacuum chamber, the door of the vacuum chamber was closed, and the vacuum chamber was heated and stabilized at 300°C. The degree of vacuum of the vacuum chamber was stabilized at -0.099 MPa. Subsequently, a gas of DMDES diluted to 0.05% with nitrogen was introduced into the vacuum chamber at 200 sccm, oxygen was introduced into an ozone generator at 2000 sccm, and a gas having a ratio of oxygen to ozone of 98:2 was introduced into the vacuum chamber. The reaction was performed for 90 minutes.

Next, the production of the second membrane by chemical vapor deposition, that is, the methylsilylation of the surface of the first membrane, was performed on the column hardware after the production of the first membrane using DMDES as a raw material on the liquid-contact portion by mobile phase of the column hardware made of stainless steel. After the production of the above first membrane, a gas obtained by diluting TMES to 0.05% with nitrogen was introduced into the vacuum chamber at 200 sccm, and the introduction of the mixed gas of oxygen and ozone was stopped. The reaction was performed at 300°C and at a degree of vacuum of -0.099 MPa for 2 hours.

The column hardware after the production of the first membrane and the methylsilylation of the surface of the first membrane (the production of the second membrane) was filled with octadecylsilylated silica gel (InertSustainSwift C18, 1.9 µm, GL Sciences Inc.) to produce a column with an inner diameter of 2.1 mm and a length of 5 cm. Using the produced column, under the following conditions, the analysis of compounds having metal coordination properties and having a base was performed to confirm the peak shape (Figure 15).

Using a UHPLC device Nexera (Shimadzu Corporation), a mobile phase (5 mM ammonium formate aqueous solution) was sent at a flow rate of 0.4 mL/min. The temperature condition was 40°C. An MS/MS detector (LCMS-8030 plus, Shimadzu Corporation) was used for detection. Ionization in the detector was performed in positive mode, and multi-resolution monitoring (MRM) was used for detection. For the sample, Sample I: an aqueous solution of adenosine triphosphate (ATP, 500 µg/L), adenosine diphosphate (ADP, 500 µg/L), and adenosine monophosphate (AMP, 500 µg/L) was used. The sample injection volume was 2 µL.

The collected chromatogram is shown in Figure 15. In Figure 15, tailing was observed with ATP, but both ADP and AMP were eluted as peaks with good symmetry.

In Figure 15, since the liquid-contact portion by mobile phase of the stainless steel column hardware was coated with the first membrane made from DMDES as a raw material, and the surface of the first membrane was methylsilylated and the number of silanol groups was reduced, it can be understood that tailing was observed with ATP, but ADP and AMP both were eluted as peaks having good symmetry.

From the above results, the following can be understood. That is, from the results of Example 1, Example 2, and Example 3 (Figure 4(A), Figure 5, and Figure 6(A)), in the production of the first membrane of SiO₂ on the liquid-contact portion by mobile phase of the metal column hardware for liquid chromatography and the production of the second membrane by methylsilylation of the surface of the first membrane, when the raw material of the second membrane was dimethyldiethoxysilane (DMDES) and the reaction time was 2 hours, DMDES was the most effective as a raw material of the first membrane, methyltriethoxysilane (MTES) was the second most effective, and perhydropolysilazane was the third most effective.

Further, from the results of Example 1, Example 3, and Example 4 (Figure 4(A), Figure 6(A), and Figure 8(A)), when the first membrane was produced by stacking a layer using perhydropolysilazane as a raw material and a layer using DMDES as a raw material, if the layer using DMDES as a raw material finally became the surface of the first membrane, the results of the case in which the raw material of the second membrane to be produced later was DMDES (Figure 8(A)) were closer to the results of the case in which the raw material of the first membrane was DMDES and the raw material of the second membrane was DMDES (Figure 6(A)) than the results of the case in which the raw material of the first membrane was perhydropolysilazane and the raw material of the second membrane was DMDES (Figure 4(A)).

In addition, from the results of Example 3 and Example 5 (Figure 6(A), Figure 6(B), Figure 9(A), and Figure 9(B)), in the case of column hardware including a column tube having an inner diameter of 2.1 mm and a length of 5 cm, and column hardware including a column tube having an inner diameter of 2.1 mm and a length of 15 cm, column hardware having similar performance and satisfactory performance was produced by the same production process in which the raw material of the first membrane was DMDES and the reaction was performed for 90 minutes and in which the raw material of the second membrane was DMDES and methylsilylation was performed for 2 hours.

In addition, from the results of Example 6 and Example 3 (Figure 12 and Figure 6(A)), it was found that when the first membrane was produced by the same production process (DMDES was used as the raw material of the first membrane, and the reaction was performed for 90 minutes) in column hardware having the same dimensions, and the raw material of the second membrane was the same, namely, DMDES, the non-specific adsorption of a compound having metal coordination properties and having a base to the column hardware was further reduced when the reaction time for producing the second membrane was longer than 1 hour, namely, 2 hours.

Further, from the results of Example 7 and Example 8 (Figure 13(A), Figure 14(A) and Figure 14(B)), in the case of the column hardware including a column tube having an inner diameter of 2.1 mm and a length of 5 cm, satisfactory performance was obtained by the production process in which DMDES was used as the raw material of the first membrane and the reaction was performed for 90 minutes and in which DMDES was used as the raw material of the second membrane and methylsilylation was performed for 2 hours. In contrast, in the case of the stainless steel column tube having an inner diameter of 1.0 mm and a length of 10 m, the same performance as the column hardware including a column tube having an inner diameter of 2.1 mm and a length of 5 cm was not obtained by the production process in which DMDES was used as the raw material of the first membrane and the reaction was performed for 90 minutes and in which DMDES was used as the raw material of the second membrane and methylsilylation was performed for 2 hours. Thus, it was found that in order to obtain the same performance, the production of the first membrane requires a reaction time of 4 hours or more.

Further, from the results of Example 3 and Example 9 (Figure 6(A) and Figure 15), when the production process in which DMDES was used as the raw material of the first membrane and the reaction was performed for 90 minutes and in which DMDES was used as the raw material of the second membrane and methylsilylation was performed for 2 hours was compared with the production process in which DMDES was used as the raw material of the first membrane and the reaction was performed for 90 minutes and in which TMES was used as the raw material of the second membrane and methylsilylation was performed for 2 hours, better results were obtained when the raw material of the second membrane was DMDES.

Furthermore, in Example 3 and Example 5, in the case of a column tube having an inner diameter of 2.1 mm and a length of 5 cm and a column tube having an inner diameter of 2.1 mm and a length of 15 cm, a first membrane for obtaining such high performance that the peak height of adenosine monophosphate (AMP) exceeded the peak height of AMP in the PEEK columns of the comparative examples was produced by oxidation and heating for 90 minutes. In contrast, in Example 8, in the case of a column tube having an inner diameter of 1.0 mm and a length of 10 m, the same performance as those of the column tubes of Example 3 and Example 5 was not obtained by oxidation and heating for 90 minutes, and the same performance as those of the column tubes of Example 3 and Example 5 was obtained by oxidation and heating for 4 hours. From this, in the production of the first membrane by the diffusion of a raw material diluted with an inert gas into the column tube included in the column hardware for liquid chromatography, since the column tube is cylindrical, it can be understood that the smaller the inner diameter and the larger the length, the less easily the diffusion of the raw material occurs, and it takes a longer time for heating in air or for oxidation and heating in air or in a vacuum for the production of the first membrane.

Also, in the case of the column hardware used in Example 3 in which a column tube having an inner diameter of 2.1 mm was used, a frit having a thickness of 1 mm and a pore diameter of 1.9 pm or less was used, and despite the fact that the pore diameter of the frit was very small, it can be understood that a first membrane for obtaining such high performance that the peak height of adenosine monophosphate (AMP) exceeded the peak height of AMP in the case of the PEEK column of the comparative example was produced by oxidation and heating for 90 minutes. Even when the inner diameter of the column tube of the column hardware is 1.0 mm, if the outer diameter of the packing material is 1.9 µm, a frit having the same thickness and pore diameter as those used in column hardware using a column tube having an inner diameter of 2.1 mm can be used.

In the case of the column hardware used in Example 3 and Example 5 in which a column tube having an inner diameter of 2.1 mm was used, an internally processable end union with a flow path having the smallest inner diameter was used, and a first membrane for obtaining such high performance that the peak height of adenosine monophosphate (AMP) exceeded the peak height of AMP in the case of the PEEK columns of the comparative examples was produced in the flow path in the end union by oxidation and heating for 90 minutes. Even when the inner diameter of the column hardware is 1.0 mm, an end union with a flow path having the same inner diameter and length as the inner flow path of the end union used in the column hardware having an inner diameter of 2.1 mm can be used.

The present invention is characterized in that a first membrane of SiO₂ is produced on a metallic liquid-contact portion by mobile phase of column hardware for liquid chromatography, and a second membrane produced by alkylsilylation of silanol groups of SiO₂ is provided on the first membrane. However, when the second membrane is provided on the first membrane by condensing the silanol groups of SiO₂ with a silylating agent having a functional group different from alkyl groups, care must be taken so that the main interaction characteristics of the packing material are not inhibited and the coverage rate of silylation is not lowered. For example, when the packing material is aminopropylsilylated silica gel, it is preferable that a second membrane produced by aminopropylsilylation of the silanol groups of SiO₂ be provided on the first membrane. In addition, when the packing material is dihydroxypropylsilylated silica gel, it is preferable that a second membrane produced by dihydroxypropylsilylation of the silanol groups of SiO₂ be provided on the first membrane.

### [Industrial Applicability]

According to the present invention as described above, in liquid chromatography, it is possible to improve the performance of a column, that is, to reduce the non-specific adsorption of a compound having metal coordination properties onto the column, and to reduce the non-specific adsorption of a basic compound or a compound having a base onto the column, so that the analytical and preparative efficiencies of substances are improved and it can be utilized in research and applications in various fields.

### [Description of Symbols]

- 1: Column hardware
- 11: Column hardware
- 12: Column hardware
- 21: Column tube
- 22: Frit (filter)
- 23: End union
- 24: Dispersion plate
- 3: Liquid-contact portion by mobile phase
- 4: Membrane
- 41: First membrane
- 42: Second membrane

## Claims

1. Column hardware for liquid chromatography, comprising a first membrane of SiO₂ provided on a metallic liquid-contact portion by mobile phase of the column hardware for liquid chromatography, and a second membrane provided on/above the first membrane, the second membrane being produced by alkylsilylation of silanol groups on a SiO₂ surface.

2. The column hardware for liquid chromatography according to claim 1, wherein the second membrane is composed of a membrane produced by alkylsilylation of the silanol groups on the SiO₂ surface of the first membrane.

3. The column hardware for liquid chromatography according to claim 1 or claim 2, wherein a raw material of the first membrane is one or more selected from the following: an inorganic polysilazane, a tetraalkoxysilane, a methyltrialkoxysilane, a dimethyldialkoxysilane, a trimethylmonoalkoxysilane, an ethyltrialkoxysilane, a diethyldialkoxysilane, a triethylmonoalkoxysilane, a propyltrialkoxysilane, a dipropyldialkoxysilane, a tripropylmonoalkoxysilane, a dimethyl type cyclic siloxane such as hexamethylcyclotrisiloxane or octamethylcyclotetrasiloxane, a diethyl type cyclic siloxane, a dipropyl type cyclic siloxane, a hexamethyldisiloxane, a linear polydimethylsiloxane such as octamethyltrisiloxane or decamethyltetrasiloxane, a linear polydiethylsiloxane, and a linear polydipropylsiloxane.

4. The column hardware for liquid chromatography according to claim 3, wherein the raw material of the first membrane is one or more selected from the following: perhydropolysilazane, tetramethoxysilane, tetraethoxysilane, tetrapropoxysilane, methyltrimethoxysilane, methyltriethoxysilane, methyltripropoxysilane, dimethyldimethoxysilane, dimethyldiethoxysilane, dimethyldipropoxysilane, trimethylmethoxysilane, trimethylethoxysilane, and trimethylpropoxysilane.

5. The column hardware for liquid chromatography according to any one of claims 1 to 4, wherein a raw material of the second membrane is one or more selected from the following: an alkyltrialkoxysilane, a dialkyldialkoxysilane, and a trialkylmonoalkoxysilane.

6. The column hardware for liquid chromatography according to claim 5, wherein the raw material of the second membrane is one or more selected from the following: methyltrimethoxysilane, methyltriethoxysilane, methyltripropoxysilane, dimethyldimethoxysilane, dimethyldiethoxysilane, dimethyldipropoxysilane, trimethylmethoxysilane, trimethylethoxysilane, trimethylpropoxysilane, ethyltrimethoxysilane, ethyltriethoxysilane, ethyltripropoxysilane, diethyldimethoxysilane, diethyldiethoxysilane, diethyldipropoxysilane, triethylmethoxysilane, triethylethoxysilane, and triethylpropoxysilane.

7. The column hardware for liquid chromatography according to any one of claims 1 to 6, wherein the second membrane is composed of a membrane produced by methylsilylation of the silanol groups on the SiO₂ surface.

8. The column hardware for liquid chromatography according to any one of claims 1 to 6, wherein the second membrane is composed of a membrane produced by ethylsilylation of the silanol groups on the SiO₂ surface.

9. The column hardware for liquid chromatography according to any one of claims 1 to 8, wherein a column tube constituting the column hardware for liquid chromatography has an inner diameter of 1.0 mm or more and a length of 10 m or less.

10. The column hardware for liquid chromatography according to any one of claims 1 to 9, wherein a column tube constituting the column hardware for liquid chromatography has an inner diameter of 2.1 mm or more.

11. The column hardware for liquid chromatography according to any one of claims 1 to 10, wherein the first membrane is composed of a first layer composed of one or more kinds of raw materials.

12. The column hardware for liquid chromatography according to any one of claims 1 to 10, wherein the first membrane is composed of a first layer composed of one or more kinds of raw materials and one or more second layers stacked on the first layer and composed of one or more kinds of raw materials different from the raw material forming the first layer.

13. The column hardware for liquid chromatography according to claim 12, wherein the surface of the first membrane is composed of a second layer made from dimethyldiethoxysilane as a raw material.

14. The column hardware for liquid chromatography according to any one of claims 1 to 13, wherein a strength of hydrophobic interaction characteristics of the second membrane is equal to or lower than a strength of hydrophobic interaction characteristics of a packing material with which the column hardware for liquid chromatography is to be filled.

15. The column hardware for liquid chromatography, wherein the liquid-contact portion by mobile phase of the column hardware for liquid chromatography is coated with a SiO₂ membrane, and a surface of the SiO₂ membrane is alkylsilylated.

16. A separation column for liquid chromatography, comprising the column hardware for liquid chromatography according to any one of claims 1 to 15 and a packing material with which the column hardware for liquid chromatography is filled.

17. A process for producing column hardware for liquid chromatography, comprising providing a first membrane of SiO₂ on a metallic liquid-contact portion by mobile phase of the column hardware for liquid chromatography, and providing, on/above the first membrane, a second membrane in which silanol groups on a SiO₂ surface are alkylsilylated.

18. The process for producing column hardware for liquid chromatography according to claim 17, wherein the metallic liquid-contact portion by mobile phase of the column hardware for liquid chromatography is coated with the first membrane of SiO₂, and the silanol groups on the SiO₂ surface of the first membrane are alkylsilylated to form the second membrane.

19. The process for producing column hardware for liquid chromatography according to claim 17 or claim 18, wherein a raw material of the first membrane is one or more selected from the following: an inorganic polysilazane, a tetraalkoxysilane, a methyltrialkoxysilane, a dimethyldialkoxysilane, a trimethylmonoalkoxysilane, an ethyltrialkoxysilane, a diethyldialkoxysilane, a triethylmonoalkoxysilane, a propyltrialkoxysilane, a dipropyldialkoxysilane, a tripropylmonoalkoxysilane, a dimethyl type cyclic siloxane such as hexamethylcyclotrisiloxane or octamethylcyclotetrasiloxane, a diethyl type cyclic siloxane, a dipropyl type cyclic siloxane, a hexamethyldisiloxane, a linear polydimethylsiloxane such as octamethyltrisiloxane or decamethyltetrasiloxane, a linear polydiethylsiloxane, and a linear polydipropylsiloxane.

20. The process for producing column hardware for liquid chromatography according to any one of claims 17 to 19, wherein a raw material of the second membrane is one or more selected from the following: an alkyltrialkoxysilane, a dialkyldialkoxysilane, and a trialkylmonoalkoxysilane.

21. The process for producing column hardware for liquid chromatography according to any one of claims 17 to 20, wherein the first membrane is produced in a vacuum with a degree of vacuum of -0.099 MPa or more by diffusing a gas obtained by dilution of the raw material of the first membrane of SiO₂ to bring the raw material into contact with the liquid-contact portion by mobile phase, introducing oxygen and/or ozone into contact with the liquid-contact portion by mobile phase, and performing heating at 300°C or higher for 90 minutes or longer.

22. The process for producing column hardware for liquid chromatography according to any one of claims 17 to 21, wherein the second membrane is produced in a vacuum with a degree of vacuum of -0.099 MPa or more by diffusing a gas obtained by dilution of the raw material to bring the raw material into contact with the surface of the first membrane and performing heating at 300°C or higher for 1 hour or longer.

23. A process for producing a separation column for liquid chromatography, comprising filling, with a packing material, column hardware for liquid chromatography produced by the process for producing column hardware for liquid chromatography according to any one of claims 17 to 22.
